# EUROPEAN PATENT APPLICATION

(11) **EP 4 114 103 A1**
(43) Date of publication of application: **04.01.2023**
(21) Application number: 21779633.3
(22) Date of filing: 12.03.2021
(51) Int. Cl.: H04W 68/02

(54) **COMMUNICATION METHOD AND DEVICE**

(30) Priority: 31.03.2020 CN 202010242131; 18.05.2020 CN 202010420621
(71) Applicant: Huawei Technologies Co., Ltd., Shenzhen, Guangdong 518129, (CN)
(72) Inventor: KUANG, Yiru, Shenzhen, Guangdong 518129 (CN); XU, Haibo, Shenzhen, Guangdong 518129 (CN); ZHANG, Jian, Shenzhen, Guangdong 518129 (CN)
(74) Representative: Thun, Clemens
(86) International application number: PCT/CN2021/080632
(87) International publication number: WO 2021/197030

(57) **Abstract**

This application relates to a communication method and a device. A first terminal device receives first paging control information in a first paging transmission window, where the first paging control information indicates that the first terminal device is not paged on a current paging occasion. Alternatively, the first terminal device receives a first paging message in the first paging transmission window, where the first paging message indicates that the first terminal device is not paged on the current paging occasion. The first terminal device does not monitor paging control information in the first paging transmission window, or does not monitor a paging occasion in the first paging transmission window. In embodiments of this application, if there is no paging message for the first terminal device on a PO, the first terminal device does not perform monitoring in the first paging transmission window, to reduce power consumption of the terminal device.

## Description

### CROSS-REFERENCE TO RELATED APPLICATIONS

This application claims priority to Chinese Patent Application No. 202010242131.6, filed with the China National Intellectual Property Administration on March 31, 2020 and entitled "METHOD FOR PAGING UE IN eDRX, UE, AND NETWORK DEVICE", which is incorporated herein by reference in its entirety. This application claims priority to Chinese Patent Application No. 202010420621.0, filed with the China National Intellectual Property Administration on May 18, 2020 and entitled "COMMUNICATION METHOD AND DEVICE", which is incorporated herein by reference in its entirety.

### TECHNICAL FIELD

This application relates to the field of communication technologies, and in particular, to a communication method and a device.

### BACKGROUND

A discontinuous reception (discontinuous reception, DRX) mechanism in a long term evolution (long term evolution, LTE) system is still used in a fifth-generation (5 generation, 5G) new radio (new radio, NR) technology. The DRX mechanism includes a DRX cycle. A terminal device periodically "wakes up" for a period of time in the DRX cycle, and may keep in a "sleep" state in the other time in the DRX cycle, to reduce power consumption. In addition, when the terminal device is in a radio resource control (radio resource control, RRC) idle (idle) state or an RRC inactive (inactive) state, if a core network or a base station needs to send downlink data to the terminal device, the core network or the base station first sends a paging (paging) message to the terminal device, to page the terminal device. After receiving the paging message, the terminal device initiates an RRC connection establishment process to receive the downlink data. A terminal device for which DRX is configured "wakes up" on a paging occasion (paging occasion, PO) included in the DRX cycle to receive a paging message.

To further reduce power consumption, extended DRX (extended DRX, eDRX) is introduced to the DRX mechanism, to extend the DRX cycle to a larger value. In other words, the terminal device may "sleep" for a longer time and "wake up" again. A paging transmission window (paging transmission window, PTW) is introduced to eDRX. One eDRX cycle includes one PTW, and the PTW includes one or more POs. In one eDRX cycle, the terminal device "wakes up" on one or more POs in a PTW to receive a paging message, until a paging message including an identity (ID) of the terminal device is successfully received or the PTW ends.

Currently, in one PTW, only some terminal devices are paged, but another terminal device that is not paged still needs to monitor all POs in the PTW, to determine whether the terminal device is paged. However, in this case, it is clear that the another terminal device that is not paged does not receive a paging message including an ID of the terminal device. This is unnecessary, and consequently a waste of power is caused

### SUMMARY

Embodiments of this application provide a communication method and a device, to reduce power consumption of a terminal device.

According to a first aspect, a first communication method is provided. The method includes: receiving first paging control information in a first paging transmission window, where the first paging control information indicates that a first terminal device is not paged on a current paging occasion, or receiving a first paging message in the first paging transmission window, where the first paging message indicates that the first terminal device is not paged on the current paging occasion; and skipping monitoring paging control information in the first paging transmission window, or skipping monitoring a paging occasion in the first paging transmission window.

The method may be performed by a first communications apparatus. The first communications apparatus may be a communications device, or may be a communications apparatus, for example, a chip, that can support the communications device in implementing a function required in the method. For example, the first communications apparatus is a terminal device, a chip that is disposed in the terminal device and that is configured to implement a function of the terminal device, or another component configured to implement the function of the terminal device. In the following description process, an example in which the first communications apparatus is the terminal device is used.

In embodiments of this application, if there is no paging message for the first terminal device on a PO, the first terminal device does not perform monitoring in the first paging transmission window, for example, the first terminal device does not perform monitoring on the remaining POs included in the first paging transmission window, to reduce power consumption of the terminal device. For example, a paging message sent to the first terminal device in the first paging transmission window remains unchanged. In this case, if there is no paging message for the first terminal device on a PO, there is no paging message for the first terminal device on the remaining POs other than the PO in the first paging transmission window. In this case, the first terminal device does not perform monitoring in the first paging transmission window, and receiving of the paging message by the first terminal device is not affected.

With reference to the first aspect, in a first possible implementation of the first aspect, the method further includes:
receiving a second paging message in a second paging transmission window.

For example, an access network device has sent the first paging control information to indicate that there is no paging message on the current PO, or has sent the first paging message to indicate that the first terminal device is not paged on the current PO, but a core network device obtains another paging message for the first terminal device, for example, the second paging message. In this case, the core network device may send the second paging message to the access network device in the second paging transmission window, so that the access network device pages the first terminal device in the second paging transmission window. Alternatively, although the core network device sends the second paging message to the access network device in the first paging transmission window, the access network device pages the first terminal device in the second paging transmission window. Alternatively, the access network device has sent the first paging control information to indicate that there is no paging message on the current PO, or has sent the first paging message to indicate that the first terminal device is not paged on the current PO, but the access network device obtains data of the first terminal device. In this case, the access network device needs to page the first terminal device. For example, the access network device generates the second paging message. In this case, the access network device may page the first terminal device in the second paging transmission window. If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, in embodiments of this application, the first terminal device receives the second paging message in the second paging transmission window, so that the first terminal device can receive the second paging message, a delay of receiving the second paging message is within an acceptable range, and power consumption caused by monitoring a PO by the first terminal device in the first paging transmission window can be reduced.

With reference to the first aspect or the first possible implementation of the first aspect, in a second possible implementation of the first aspect, the second paging transmission window is located after the first paging transmission window in time domain, and the first paging transmission window and the second paging transmission window are two adjacent paging transmission windows in time domain.

The second paging transmission window and the first paging transmission window are not a same paging transmission window. For example, the second paging transmission window is a paging transmission window located after the first paging transmission window in time domain. The first paging transmission window and the second paging transmission window are two adjacent paging transmission windows in time domain. In this way, the second paging message can be sent to the first terminal device in time as much as possible. Alternatively, the first paging transmission window and the second paging transmission window may be two non-adjacent paging transmission windows in time domain. For example, the second paging transmission window is specified in a protocol, set by the access network device, or set by the core network device, for example, based on a delay requirement of a paging message. In this way, a delay of receiving the paging message meets a requirement, and a time for sending the second paging message is more flexible.

With reference to the first aspect, the first possible implementation of the first aspect, or the second possible implementation of the first aspect, in a third possible implementation of the first aspect, the method further includes:
receiving first indication information, where the first indication information indicates that a paging message sent in the first paging transmission window remains unchanged.

For example, a network device (the core network device or the access network device) determines that the first terminal device can support the paging message sent in the first paging transmission window in remaining unchanged. For example, the network device determines, based on capability information of the first terminal device, that the first terminal device can support the paging message sent in the first paging transmission window in remaining unchanged. In this case, the network device may send the first indication information. After receiving the first indication information, the first terminal device may determine that the paging message sent in the first paging transmission window remains unchanged. In this case, if the first terminal device determines that there is no paging message on a PO in the first paging transmission window, the first terminal device does not need to monitor the remaining POs in the first paging window, to reduce power consumption of the first terminal device.

With reference to the third possible implementation of the first aspect, in a fourth possible implementation of the first aspect, the first indication information is carried in an RRC message or a system message.

If the first indication information is sent by the access network device, the access network device may send the first indication information to the first terminal device by using a unicast message. The unicast message is, for example, an RRC message. Alternatively, the access network device may send the first indication information by using a broadcast message. In this way, more terminal devices can receive the first indication information, to reduce signaling overheads. The broadcast message is, for example, a system message.

With reference to the third possible implementation of the first aspect or the fourth possible implementation of the first aspect, in a fifth possible implementation of the first aspect, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

The first indicator field may be a newly added indicator field in the system message, and the first indication information is carried in the newly added indicator field, so that a location of the first indication information can be clearer. Alternatively, the first indicator field may be an existing indicator field in the system message, for example, a field used to indicate a hyper frame number or a field used to indicate that a first cell supports eDRX. The first indication information is carried in the existing indicator field, and a structure of the system message does not need to be changed, so that technical solutions in embodiments of this application can be better compatible with the conventional technology.

With reference to any one of the first aspect or the first possible implementation of the first aspect to the fifth possible implementation of the first aspect, in a sixth possible implementation of the first aspect, the method further includes:
sending capability information of the first terminal device, where the capability information is used to indicate that the first terminal device supports the paging message sent in the first paging transmission window in remaining unchanged.

The network device (the core network device or the access network device) may determine, based on the capability information of the terminal device, whether the paging message sent by the network device to the terminal device in the first paging transmission window changes. Certainly, the network device may alternatively determine, in another manner, whether the paging message sent to the terminal device in the first paging transmission window changes.

With reference to the sixth possible implementation of the first aspect, in a seventh possible implementation of the first aspect, that the capability information is used to indicate that the first terminal device supports the paging message sent in the first paging transmission window in remaining unchanged includes:
power saving information included in the capability information is used to indicate that the first terminal device has a power saving requirement.

Capability information of one terminal device may include, for example, power saving information, and the power saving information may indicate whether the terminal device has an energy saving requirement (or a power saving requirement). If the power saving information included in the capability information of the terminal device indicates that the terminal device has an energy saving requirement, it may be considered that the capability information indicates that the terminal device supports monitoring a paging message by using new behavior. Therefore, the network device (the core network device or the access network device) may determine that, if a paging message sent to the terminal device in the first paging transmission window remains unchanged, power consumption of the terminal device can be reduced. Alternatively, if the power saving information included in the capability information of the terminal device indicates that the terminal device has no energy saving requirement, it may be considered that the capability information indicates that the terminal device does not support monitoring a paging message by using new behavior. Therefore, the network device may determine that, if a paging message sent to the terminal device in the first paging transmission window remains unchanged, power consumption of the terminal device cannot be reduced.

According to a second aspect, a second communication method is provided. The method includes: determining that a first terminal device is not paged in a first paging transmission window; and sending first paging control information in the first paging transmission window, where the first paging control information indicates that there is no paging message on a current paging occasion, or sending a first paging message in the first paging transmission window, where the first paging message indicates that the first terminal device is not paged on the current paging occasion.

The method may be performed by a second communications apparatus. The second communications apparatus may be a communications device, or may be a communications apparatus, for example, a chip, that can support the communications device in implementing a function required in the method. For example, the second communications apparatus is a network device, a chip that is disposed in the network device and that is configured to implement a function of the network device, or another component configured to implement the function of the network device. In the following description process, an example in which the second communications apparatus is the network device is used. For example, the network device is an access network device.

With reference to the second aspect, in a first possible implementation of the second aspect, the method further includes:
obtaining a second paging message for the first terminal device in the first paging transmission window; and
sending the second paging message in a second paging transmission window.

For example, the access network device has sent the first paging control information to indicate that there is no paging message on the current PO, or has sent the first paging message to indicate that the first terminal device is not paged on the current PO, but a core network device obtains another paging message for the first terminal device, for example, the second paging message. In this case, although the core network device sends the second paging message to the access network device in the first paging transmission window, the access network device pages the first terminal device in the second paging transmission window. If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, in embodiments of this application, the first terminal device receives the second paging message in the second paging transmission window, so that the first terminal device can receive the second paging message, a delay of receiving the second paging message is within an acceptable range, and power consumption caused by monitoring a PO by the first terminal device in the first paging transmission window can be reduced.

With reference to the second aspect, in a second possible implementation of the second aspect, the method further includes:
obtaining data of the first terminal device in the first paging transmission window; and
sending a second paging message in a second paging transmission window, where the second paging message is used to page the first terminal device, to receive the data of the first terminal device.

For example, the access network device has sent the first paging control information to indicate that there is no paging message on the current PO, or has sent the first paging message to indicate that the first terminal device is not paged on the current PO, but the access network device obtains the data of the first terminal device. In this case, the access network device needs to page the first terminal device. For example, the access network device generates the second paging message. In this case, the access network device may page the first terminal device in the second paging transmission window. If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, in embodiments of this application, the first terminal device receives the second paging message in the second paging transmission window, so that the first terminal device can receive the second paging message, a delay of receiving the second paging message is within an acceptable range, and power consumption caused by monitoring a PO by the first terminal device in the first paging transmission window can be reduced.

With reference to the second aspect, the first possible implementation of the second aspect, or the second possible implementation of the second aspect, in a third possible implementation of the second aspect, the method further includes:
skipping sending the second paging message in the first paging transmission window.

For example, the access network device has sent the first paging control information to indicate that there is no paging message on the current PO, or has sent the first paging message to indicate that the first terminal device is not paged on the current PO, but the core network device obtains another paging message for the first terminal device, for example, the second paging message. In this case, although the core network device sends the second paging message to the access network device in the first paging transmission window, the access network device pages the first terminal device in the second paging transmission window, and does not page the first terminal device in the first paging transmission window. In this manner, a case in which the first terminal device cannot receive the paging message can be avoided as much as possible, to improve a paging success rate.

With reference to any one of the second aspect or the first possible implementation of the second aspect to the third possible implementation of the second aspect, in a fourth possible implementation of the second aspect, the second paging transmission window is located after the first paging transmission window in time domain, and the first paging transmission window and the second paging transmission window are two adjacent paging transmission windows in time domain.

With reference to any one of the second aspect or the first possible implementation of the second aspect to the fourth possible implementation of the second aspect, in a fifth possible implementation of the second aspect, the method further includes:
sending first indication information, where the first indication information indicates that a paging message sent in the first paging transmission window remains unchanged.

With reference to the fifth possible implementation of the second aspect, in a sixth possible implementation of the second aspect, the first indication information is carried in an RRC message or a system message.

With reference to the fifth possible implementation of the second aspect or the sixth possible implementation of the second aspect, in a seventh possible implementation of the second aspect, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

With reference to any one of the second aspect or the first possible implementation of the second aspect to the seventh possible implementation of the second aspect, in an eighth possible implementation of the second aspect, the method further includes:
receiving second indication information from a core network device, where the second indication information indicates that a paging message sent in the first paging transmission window remains unchanged; or
receiving capability information of the first terminal device, and determining, based on the capability information, that a paging message sent to the first terminal device in the first paging transmission window remains unchanged;or
receiving capability information of a terminal device included in a first cell, and determining, based on the capability information, that a paging message sent in the first paging transmission window remains unchanged.

The access network device may determine, based on the capability information of the first terminal device, that the paging message sent to the first terminal device in the first paging transmission window remains unchanged. Alternatively, the access network device may determine, based on the capability information of the one or more terminal devices, that the paging message sent in the first paging transmission window remains unchanged. For example, if the access network device determines that the paging message sent in the first cell in the first paging transmission window remains unchanged, a paging message sent to any terminal device in the first cell in the first paging transmission window remains unchanged. In other words, technical solutions in embodiments of this application may be specific to a terminal device, or may be specific to a cell. Alternatively, the core network device may determine that the paging message sent to the first terminal device in the first paging transmission window remains unchanged, or determine that the paging message sent in the first cell in the first paging transmission window remains unchanged, and the core network device may notify the access network device. That is, determining may be performed by the access network device or the core network device. This is more flexible.

With reference to the eighth possible implementation of the second aspect, in a ninth possible implementation of the second aspect, the capability information of the first terminal device includes power saving information, and the power saving information is used to indicate that the first terminal device has a power saving requirement.

For technical effects brought by the second aspect or some implementations of the second aspect, refer to the descriptions of the technical effects of the first aspect or corresponding implementations of the first aspect.

According to a third aspect, a third communication method is provided. The method includes: determining that a first terminal device is not paged in a first paging transmission window; and sending indication information, where the indication information indicates that a paging message sent in the first paging transmission window remains unchanged.

The method may be performed by a third communications apparatus. The third communications apparatus may be a communications device, or may be a communications apparatus, for example, a chip, that can support the communications device in implementing a function required in the method. For example, the third communications apparatus is a network device, a chip that is disposed in the network device and that is configured to implement a function of the network device, or another component configured to implement the function of the network device. In the following description process, an example in which the third communications apparatus is the network device is used. For example, the network device is a core network device.

With reference to the third aspect, in a first possible implementation of the third aspect, the method further includes:
obtaining a second paging message for the first terminal device in the first paging transmission window; and
sending the second paging message to an access network device in a second paging transmission window, or sending the second paging message to the access network device in the first paging transmission window.

For example, the access network device has sent the first paging control information to indicate that there is no paging message on the current PO, or has sent the first paging message to indicate that the first terminal device is not paged on the current PO, but the core network device obtains another paging message for the first terminal device, for example, the second paging message. In this case, the core network device may send the second paging message to the access network device in the second paging transmission window, so that the access network device can page the first terminal device in the second paging transmission window. If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, in embodiments of this application, the first terminal device receives the second paging message in the second paging transmission window, so that the first terminal device can receive the second paging message, a delay of receiving the second paging message is within an acceptable range, and power consumption caused by monitoring a PO by the first terminal device in the first paging transmission window can be reduced.

With reference to the third aspect or the first possible implementation of the third aspect, in a second possible implementation of the third aspect, the method further includes:
skipping sending the second paging message in the first paging transmission window.

With reference to the third aspect, the first possible implementation of the third aspect, or the second possible implementation of the third aspect, in a third possible implementation of the third aspect, the second paging transmission window is located after the first paging transmission window in time domain, and the first paging transmission window and the second paging transmission window are two adjacent paging transmission windows in time domain.

With reference to any one of the third aspect or the first possible implementation of the third aspect to the third possible implementation of the third aspect, in a fourth possible implementation of the third aspect, the sending indication information includes:
sending first indication information to the first terminal device, where the first indication information indicates that a paging message sent in the first paging transmission window remains unchanged; and/or
sending second indication information to the access network device, where the second indication information indicates that a paging message sent in the first paging transmission window remains unchanged.

The core network device may indicate the first terminal device, or indicate the access network device, or indicate the first terminal device and the access network device.

With reference to the fourth possible implementation of the third aspect, in a fifth possible implementation of the third aspect, the sending second indication information to the access network device includes:
sending the second indication information to the access network device when registration of the first terminal device is completed; or
sending the second indication information to the access network device when it is determined that the first terminal device is not paged.

For example, the core network device may send the second indication information to the access network device when registration of the first terminal device is completed, to indicate that the paging message sent to the first terminal device in the first paging transmission window remains unchanged. In this case, the core network device does not need to send the second indication information to the access network device each time there is a paging message for the first terminal device. In other words, the core network device needs to send the second indication information to the access network device only once. This helps reduce signaling overheads. Alternatively, the core network device may send the second indication information to the access network device each time a paging message is sent to the first terminal device. Because the terminal device may be in a moving state, and an energy saving requirement of the terminal device is not necessarily constant, and may change with time, the terminal device may alternatively send updated capability information to the core network device. In this case, when there is a paging message for the first terminal device, the core network device may determine, based on latest capability information of the first terminal device, whether the first terminal device supports the paging message sent to the first terminal device in the first paging transmission window in remaining unchanged. If yes, the core network device sends the second indication information to the access network device, to better meet an actual requirement of the first terminal device.

With reference to any one of the third aspect or the first possible implementation of the third aspect to the fifth possible implementation of the third aspect, in a sixth possible implementation of the third aspect, the method further includes:
receiving capability information of the first terminal device, and determining, based on the capability information, that a paging message sent to the first terminal device in the first paging transmission window remains unchanged;or
receiving capability information of a terminal device included in a first cell, and determining, based on the capability information, that a paging message sent in the first paging transmission window remains unchanged.

If only the first terminal device sends the capability information of the first terminal device to the core network device, and power saving information included in the capability information of the first terminal device indicates that the first terminal device has an energy saving requirement, the core network device may determine that, when a paging message for the first terminal device is sent, the paging message sent to the first terminal device in the first paging transmission window remains unchanged. However, if the power saving information included in the capability information of the first terminal device indicates that the first terminal device has no energy saving requirement, the core network device may determine that, when a paging message for the first terminal device is sent, the paging message sent to the first terminal device in the first paging transmission window may change. Alternatively, if a plurality of terminal devices in the first cell send respective capability information to the core network device, the core network device may receive the plurality of pieces of capability information. If power saving information included in each of the plurality of pieces of capability information received by the core network device indicates that a corresponding terminal device has an energy saving requirement, or power saving information included in half or more of the plurality of pieces of capability information received by the core network device indicates that corresponding terminal devices have an energy saving requirement, the core network device may determine that, when a paging message for the terminal device in the first cell is sent, the paging message sent in the first paging transmission window remains unchanged. In this case, it is considered that paging messages sent to all the terminal devices in the first cell in the first paging transmission window remain unchanged. Alternatively, if power saving information included in each of the plurality of pieces of capability information received by the core network device indicates that a corresponding terminal device has no energy saving requirement, or power saving information included in half or more of the plurality of pieces of capability information received by the core network device indicates that corresponding terminal devices have no energy saving requirement, the core network device may determine that, when a paging message for the terminal device in the first cell is sent, the paging message sent in the first paging transmission window may change. In this case, the paging message sent to the first terminal device in the first paging transmission window may change.

With reference to the sixth possible implementation of the third aspect, in a seventh possible implementation of the third aspect, the capability information of the first terminal device includes power saving information, and the power saving information is used to indicate that the first terminal device has a power saving requirement.

For technical effects brought by the third aspect or some implementations of the third aspect, refer to the descriptions of the technical effects of the first aspect or corresponding implementations of the first aspect, or refer to the descriptions of the technical effects of the second aspect or corresponding implementations of the second aspect.

According to a fourth aspect, a fourth communication method is provided. The method includes: receiving paging control information from a network device, where the paging control information includes first information, and the first information is used to indicate that there is no paging message in a first paging transmission window; and kipping monitoring the paging control information in the first paging transmission window, or skipping monitoring a paging occasion in the first paging transmission window based on the first information included in the paging control information.

The method may be performed by a fourth communications apparatus. The fourth communications apparatus may be a communications device, or may be a communications apparatus, for example, a chip, that can support the communications device in implementing a function required in the method. For example, the fourth communications apparatus is a terminal device, a chip that is disposed in the terminal device and that is configured to implement a function of the terminal device, or another component configured to implement the function of the terminal device. In the following description process, an example in which the fourth communications apparatus is the terminal device is used.

In embodiments of this application, if there is no paging message in the first paging transmission window, the network device may send the paging control information, where the paging control information may indicate that there is no paging message in the first paging transmission window. In this way, after receiving the paging control message, the terminal device does not need to perform monitoring on the remaining POs in the first paging transmission window, to reduce power consumption of the terminal device.

With reference to the fourth aspect, in a first possible implementation of the fourth aspect,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

The first information may be carried in a newly added field (or field) in the paging control information, so that an indication of the first information is clearer. Alternatively, the first information may be carried in an original field in the paging control information, for example, a 2-bit field used to indicate scheduling information of a short message and/or a paging message in the paging control information, or a bit used to carry a short message, so that utilization of the paging control information can be increased without changing a format of the paging control information. This facilitates compatibility with the conventional technology.

With reference to the fourth aspect or the first possible implementation of the fourth aspect, in a second possible implementation of the fourth aspect, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

The paging control information may indicate paging to a single terminal device, or may indicate paging to one or more groups of terminal devices. For example, terminal devices may be grouped, and then paging is performed in a unit of a group. In this case, the paging control information may include a field for grouping terminal devices, and the field is, for example, a bitmap. Each bit in the bitmap may correspond to one or more groups of terminal devices. The bitmap corresponds to M groups of terminal devices in total, and M is an integer greater than or equal to 1. If a value of a bit in the bitmap is "1", it indicates that none of one or more groups of terminal devices corresponding to the bit is paged on a current PO. In other words, if the one or more groups of terminal devices receive the paging control information, it may be determined that no paging message needs to be continuously received on the current PO. In this terminal device grouping solution, a specific terminal device can learn, through setting of the bitmap in the paging control information, that the terminal device is not paged, instead of learning, only after receiving the paging control information and finding that there is no ID of the terminal device, that the terminal device is not paged. This can reduce power consumption caused by receiving and decoding the paging control information by the terminal device.

According to a fifth aspect, a fifth communication method is provided. The method includes: determining that there is no paging message in a first paging transmission window; and sending paging control information, where the paging control information includes first information, and the first information is used to indicate that there is no paging message in the first paging transmission window.

The method may be performed by a fifth communications apparatus. The fifth communications apparatus may be a communications device, or may be a communications apparatus, for example, a chip, that can support the communications device in implementing a function required in the method. For example, the fifth communications apparatus is a network device, a chip that is disposed in the network device and that is configured to implement a function of the network device, or another component configured to implement the function of the network device. In the following description process, an example in which the fifth communications apparatus is the network device is used. For example, the network device is an access network device or a core network device.

With reference to the fifth aspect, in a first possible implementation of the fifth aspect,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

With reference to the fifth aspect or the first possible implementation of the fifth aspect, in a second possible implementation of the fifth aspect, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

With reference to the fifth aspect, the first possible implementation of the fifth aspect, or the second possible implementation of the fifth aspect, in a third possible implementation of the fifth aspect, the sending paging control information includes:
sending the paging control information on the 1^{st} paging occasion included in the first paging transmission window; or
sending the paging control information on each of all paging occasions included in the first paging transmission window.

The network device may send the paging control information in a broadcast manner. Therefore, a plurality of terminal devices may receive the paging control information. When the terminal device detects the paging control information, a case such as incorrect detection or missing detection may occur, or some terminal devices may not detect the paging control information on each paging occasion. In this case, to improve a success rate of detecting the paging control information by the terminal device, optionally, the network device may send the paging control information on each of all paging occasions included in the first paging transmission window. In this way, even if the terminal device does not detect the paging control information on a paging occasion, the terminal device may detect the paging control information on a subsequent paging occasion. Certainly, this is a specific implementation of the network device. Alternatively, the network device may not send the paging control information on each paging occasion in the first paging transmission window. For example, the network device sends the paging control information in the first paging transmission window based on a first cycle. A length of the first cycle is, for example, an integer multiple of a time interval between two adjacent paging occasions. Alternatively, the network device sends the paging control information only on one or more paging occasions in the first paging transmission window. For example, the network device sends the paging control information only on the 1^{st} paging occasion in the first paging transmission window, or sends the paging control information on the 1^{st} paging occasion and a paging occasion in the middle in the first paging transmission window. In embodiments of this application, a paging occasion on which the network device sends the paging control information is not limited.

For technical effects brought by the fifth aspect or some implementations of the fifth aspect, refer to the descriptions of the technical effects of the fourth aspect or corresponding implementations of the fourth aspect.

According to a sixth aspect, a communications apparatus is provided. The communications apparatus is, for example, the first communications apparatus described above. The first communications apparatus is configured to perform the method in any one of the first aspect or the possible implementations of the first aspect. Specifically, the first communications apparatus may include a module configured to perform the method in any one of the first aspect or the possible implementations of the first aspect, for example, a processing module. Optionally, the first communications apparatus may further include a transceiver module. For example, the transceiver module may include a sending module and a receiving module. The sending module and the receiving module may be different function modules, or may be a same function module but can implement different functions. For example, the first communications apparatus is a communications device, or is a chip or another component disposed in the communications device. For example, the communications device is a terminal device. An example in which the first communications apparatus is the terminal device is used below. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module but can implement different functions. For example, if the first communications apparatus is the communications device, the transceiver is implemented by an antenna, a feeder, and a codec in the communications device. Alternatively, if the first communications apparatus is the chip disposed in the communications device, the transceiver (or the transmitter and the receiver) is, for example, a communications interface in the chip. The communications interface is connected to a radio frequency transceiver component in the communications device, to receive and send information by using the radio frequency transceiver component. In a description process of the sixth aspect, an example in which the first communications apparatus is the terminal device and includes the processing module and the transceiver module is still used for description.

The transceiver module is configured to: receive first paging control information in a first paging transmission window, where the first paging control information indicates that a first terminal device is not paged on a current paging occasion, or receive a first paging message in the first paging transmission window, where the first paging message indicates that the first terminal device is not paged on the current paging occasion.

The processing module is configured to indicate the transceiver module to skip monitoring paging control information in the first paging transmission window, or skip monitoring a paging occasion in the first paging transmission window.

With reference to the sixth aspect, in a first possible implementation of the sixth aspect, the transceiver module is further configured to receive a second paging message in a second paging transmission window.

With reference to the sixth aspect or the first possible implementation of the sixth aspect, in a second possible implementation of the sixth aspect, the second paging transmission window is located after the first paging transmission window in time domain, and the first paging transmission window and the second paging transmission window are two adjacent paging transmission windows in time domain.

With reference to the sixth aspect, the first possible implementation of the sixth aspect, or the second possible implementation of the sixth aspect, in a third possible implementation of the sixth aspect, the transceiver module is further configured to receive first indication information, where the first indication information indicates that a paging message sent in the first paging transmission window remains unchanged.

With reference to the third possible implementation of the sixth aspect, in a fourth possible implementation of the sixth aspect, the first indication information is carried in an RRC message or a system message.

With reference to the third possible implementation of the sixth aspect or the fourth possible implementation of the sixth aspect, in a fifth possible implementation of the sixth aspect, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

With reference to any one of the sixth aspect or the first possible implementation of the sixth aspect to the fifth possible implementation of the sixth aspect, in a sixth possible implementation of the sixth aspect, the transceiver module is further configured to send capability information of the first terminal device, where the capability information is used to indicate that the first terminal device supports the paging message sent in the first paging transmission window in remaining unchanged.

With reference to the sixth possible implementation of the sixth aspect, in a seventh possible implementation of the sixth aspect, that the capability information is used to indicate that the first terminal device supports the paging message sent in the first paging transmission window in remaining unchanged includes:
power saving information included in the capability information is used to indicate that the first terminal device has a power saving requirement.

For technical effects brought by the sixth aspect or some implementations of the sixth aspect, refer to the descriptions of the technical effects of the first aspect or corresponding implementations of the first aspect.

According to a seventh aspect, a communications apparatus is provided. The communications apparatus is, for example, the second communications apparatus described above. The second communications apparatus is configured to perform the method in any one of the second aspect or the possible implementations of the second aspect. Specifically, the second communications apparatus may include a module configured to perform the method in any one of the second aspect or the possible implementations of the second aspect, for example, a processing module. Optionally, the second communications apparatus may further include a transceiver module. For example, the transceiver module may include a sending module and a receiving module. The sending module and the receiving module may be different function modules, or may be a same function module but can implement different functions. For example, the second communications apparatus is a communications device, or is a chip or another component disposed in the communications device. For example, the communications device is a network device. For example, the network device is an access network device. An example in which the second communications apparatus is the access network device is used below. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module but can implement different functions. For example, if the second communications apparatus is the communications device, the transceiver is implemented by an antenna, a feeder, and a codec in the communications device. Alternatively, if the second communications apparatus is the chip disposed in the communications device, the transceiver (or the transmitter and the receiver) is, for example, a communications interface in the chip. The communications interface is connected to a radio frequency transceiver component in the communications device, to receive and send information by using the radio frequency transceiver component. In a description process of the seventh aspect, an example in which the second communications apparatus is the access network device and includes the processing module and the transceiver module is still used for description.

The processing module is configured to determine that a first terminal device is not paged in a first paging transmission window.

The transceiver module is configured to: send first paging control information in the first paging transmission window, where the first paging control information indicates that there is no paging message on a current paging occasion, or send a first paging message in the first paging transmission window, where the first paging message indicates that the first terminal device is not paged on the current paging occasion.

With reference to the seventh aspect, in a first possible implementation of the seventh aspect,
the processing module is further configured to obtain a second paging message for the first terminal device in the first paging transmission window.

The transceiver module is further configured to send the second paging message in a second paging transmission window.

With reference to the seventh aspect, in a second possible implementation manner of the seventh aspect,
the processing module is further configured to obtain data of the first terminal device in the first paging transmission window.

The transceiver module is further configured to send a second paging message in a second paging transmission window, where the second paging message is used to page the first terminal device, to receive the data of the first terminal device.

With reference to the seventh aspect, the first possible implementation of the seventh aspect, or the second possible implementation of the seventh aspect, in a third possible implementation of the seventh aspect, the transceiver module is further configured to skip sending the second paging message in the first paging transmission window.

With reference to any one of the seventh aspect or the first possible implementation of the seventh aspect to the third possible implementation of the seventh aspect, in a fourth possible implementation of the seventh aspect, the second paging transmission window is located after the first paging transmission window in time domain, and the first paging transmission window and the second paging transmission window are two adjacent paging transmission windows in time domain.

With reference to any one of the seventh aspect or the first possible implementation of the seventh aspect to the fourth possible implementation of the seventh aspect, in a fifth possible implementation of the seventh aspect, the transceiver module is further configured to send first indication information, where the first indication information indicates that a paging message sent in the first paging transmission window remains unchanged.

With reference to the fifth possible implementation of the seventh aspect, in a sixth possible implementation of the seventh aspect, the first indication information is carried in an RRC message or a system message.

With reference to the fifth possible implementation of the seventh aspect or the sixth possible implementation of the seventh aspect, in a seventh possible implementation of the seventh aspect, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

With reference to any one of the seventh aspect or the first possible implementation of the seventh aspect to the seventh possible implementation of the seventh aspect, in an eighth possible implementation of the seventh aspect, the transceiver module is further configured to:
receive second indication information from a core network device, where the second indication information indicates that a paging message sent in the first paging transmission window remains unchanged; or
receive capability information of the first terminal device, and determine, based on the capability information, that a paging message sent to the first terminal device in the first paging transmission window remains unchanged;or
receive capability information of a terminal device included in a first cell, and determine, based on the capability information, that a paging message sent in the first paging transmission window remains unchanged.

With reference to the eighth possible implementation of the seventh aspect, in a ninth possible implementation of the seventh aspect, the capability information of the first terminal device includes power saving information, and the power saving information is used to indicate that the first terminal device has a power saving requirement.

For technical effects brought by the seventh aspect or some implementations of the seventh aspect, refer to the descriptions of the technical effects of the second aspect or corresponding implementations of the second aspect.

According to an eighth aspect, a communications apparatus is provided. The communications apparatus is, for example, the third communications apparatus described above. The third communications apparatus is configured to perform the method in any one of the third aspect or the possible implementations of the third aspect. Specifically, the third communications apparatus may include a module configured to perform the method in any one of the third aspect or the possible implementations of the third aspect, for example, a processing module. Optionally, the third communications apparatus may further include a transceiver module. For example, the transceiver module may include a sending module and a receiving module. The sending module and the receiving module may be different function modules, or may be a same function module but can implement different functions. For example, the third communications apparatus is a communications device, or is a chip or another component disposed in the communications device. For example, the communications device is a network device. For example, the network device is a core network device. An example in which the third communications apparatus is the core network device is used below. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module but can implement different functions. For example, if the third communications apparatus is the communications device, the transceiver is implemented by an antenna, a feeder, and a codec in the communications device. Alternatively, if the third communications apparatus is the chip disposed in the communications device, the transceiver (or the transmitter and the receiver) is, for example, a communications interface in the chip. The communications interface is connected to a radio frequency transceiver component in the communications device, to receive and send information by using the radio frequency transceiver component. In a description process of the eighth aspect, an example in which the third communications apparatus is the core network device and includes the processing module and the transceiver module is still used for description.

The processing module is configured to determine that a first terminal device is not paged in a first paging transmission window.

The transceiver module is configured to send indication information, where the indication information indicates that a paging message sent in the first paging transmission window remains unchanged.

With reference to the eighth aspect, in a first possible implementation of the eighth aspect,
the processing module is further configured to obtain a second paging message for the first terminal device in the first paging transmission window.

The transceiver module is further configured to: send the second paging message to an access network device in a second paging transmission window, or send the second paging message to the access network device in the first paging transmission window.

With reference to the eighth aspect or the first possible implementation of the eighth aspect, in a second possible implementation of the eighth aspect, the transceiver module is further configured to skip sending the second paging message in the first paging transmission window.

With reference to the eighth aspect, the first possible implementation of the eighth aspect, or the second possible implementation of the eighth aspect, in a third possible implementation of the eighth aspect, the second paging transmission window is located after the first paging transmission window in time domain, and the first paging transmission window and the second paging transmission window are two adjacent paging transmission windows in time domain.

With reference to any one of the eighth aspect or the first possible implementation of the eighth aspect to the third possible implementation of the eighth aspect, in a fourth possible implementation of the eighth aspect, the transceiver module is configured to send the indication information in the following manner:
sending first indication information to the first terminal device, where the first indication information indicates that a paging message sent in the first paging transmission window remains unchanged; and/or
sending second indication information to the access network device, where the second indication information indicates that a paging message sent in the first paging transmission window remains unchanged.

With reference to the fourth possible implementation of the eighth aspect, in a fifth possible implementation of the eighth aspect, the transceiver module is configured to send the second indication information to the access network device in the following manner:
sending the second indication information to the access network device when registration of the first terminal device is completed; or
sending the second indication information to the access network device when it is determined that the first terminal device is not paged.

With reference to any one of the eighth aspect or the first possible implementation of the eighth aspect to the fifth possible implementation of the eighth aspect, in a sixth possible implementation of the eighth aspect, the transceiver module is further configured to:
receive capability information of the first terminal device, and determine, based on the capability information, that a paging message sent to the first terminal device in the first paging transmission window remains unchanged;or
receive capability information of a terminal device included in a first cell, and determine, based on the capability information, that a paging message sent in the first paging transmission window remains unchanged.

With reference to the sixth possible implementation of the eighth aspect, in a seventh possible implementation of the eighth aspect, the capability information of the first terminal device includes power saving information, and the power saving information is used to indicate that the first terminal device has a power saving requirement.

For technical effects brought by the eighth aspect or the possible implementations of the eighth aspect, refer to the descriptions of the technical effects of the third aspect or corresponding implementations of the third aspect.

According to a ninth aspect, a communications apparatus is provided. The communications apparatus is, for example, the fourth communications apparatus described above. The fourth communications apparatus is configured to perform the method in any one of the fourth aspect or the possible implementations of the fourth aspect. Specifically, the fourth communications apparatus may include modules configured to perform the method in any one of the fourth aspect or the possible implementations of the fourth aspect, for example, a processing module and a transceiver module. For example, the transceiver module may include a sending module and a receiving module. The sending module and the receiving module may be different function modules, or may be a same function module but can implement different functions. For example, the fourth communications apparatus is a communications device, or is a chip or another component disposed in the communications device. For example, the communications device is a terminal device. An example in which the fourth communications apparatus is the terminal device is used below. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module but can implement different functions. For example, if the fourth communications apparatus is the communications device, the transceiver is implemented by an antenna, a feeder, and a codec in the communications device. Alternatively, if the fourth communications apparatus is the chip disposed in the communications device, the transceiver (or the transmitter and the receiver) is, for example, a communications interface in the chip. The communications interface is connected to a radio frequency transceiver component in the communications device, to receive and send information by using the radio frequency transceiver component. In a description process of the ninth aspect, an example in which the fourth communications apparatus is the terminal device and includes the processing module and the transceiver module is still used for description.

The transceiver module is configured to receive paging control information from a network device, where the paging control information includes first information, and the first information is used to indicate that there is no paging message in a first paging transmission window.

The processing module is configured to indicate the transceiver module to kip monitoring the paging control information in the first paging transmission window, or skip monitoring a paging occasion in the first paging transmission window based on the first information included in the paging control information.

With reference to the ninth aspect, in a first possible implementation of the ninth aspect,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

With reference to the ninth aspect or the first possible implementation of the ninth aspect, in a second possible implementation of the ninth aspect, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

For technical effects brought by the ninth aspect or the possible implementations of the ninth aspect, refer to the descriptions of the technical effects of the fourth aspect or corresponding implementations of the fourth aspect.

According to a tenth aspect, a communications apparatus is provided. The communications apparatus is, for example, the fifth communications apparatus described above. The fifth communications apparatus is configured to perform the method in any one of the fifth aspect or the possible implementations of the fifth aspect. Specifically, the fifth communications apparatus may include modules configured to perform the method in any one of the fifth aspect or the possible implementations of the fifth aspect, for example, a processing module and a transceiver module. For example, the transceiver module may include a sending module and a receiving module. The sending module and the receiving module may be different function modules, or may be a same function module but can implement different functions. For example, the fifth communications apparatus is a communications device, or is a chip or another component disposed in the communications device. For example, the communications device is a network device. For example, the network device is an access network device or a core network device. An example in which the fifth communications apparatus is the network device is used below. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module but can implement different functions. For example, if the fifth communications apparatus is the communications device, the transceiver is implemented by an antenna, a feeder, and a codec in the communications device. Alternatively, if the fifth communications apparatus is the chip disposed in the communications device, the transceiver (or the transmitter and the receiver) is, for example, a communications interface in the chip. The communications interface is connected to a radio frequency transceiver component in the communications device, to receive and send information by using the radio frequency transceiver component. In a description process of the tenth aspect, an example in which the fifth communications apparatus is the network device and includes the processing module and the transceiver module is still used for description.

The processing module is configured to determine that there is no paging message in a first paging transmission window.

The transceiver module is configured to send paging control information, where the paging control information includes first information, and the first information is used to indicate that there is no paging message in the first paging transmission window.

With reference to the tenth aspect, in a first possible implementation of the tenth aspect,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

With reference to the tenth aspect or the first possible implementation of the tenth aspect, in a second possible implementation of the tenth aspect, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

With reference to the tenth aspect, the first possible implementation of the tenth aspect, or the second possible implementation of the tenth aspect, in a third possible implementation of the tenth aspect, the transceiver module is configured to send the paging control information in the following manner:
sending the paging control information on the 1^{st} paging occasion included in the first paging transmission window; or
sending the paging control information on each of all paging occasions included in the first paging transmission window.

For technical effects brought by the tenth aspect or the possible implementations of the tenth aspect, refer to the descriptions of the technical effects of the fifth aspect or corresponding implementations of the fifth aspect.

According to an eleventh aspect, a communications apparatus is provided. The communications apparatus is, for example, the first communications apparatus described above. The communications apparatus includes one or more processors, and optionally, may further include a communications interface. The communications interface may be configured to communicate with another apparatus or device. Optionally, the first communications apparatus may further include one or more memories, configured to store computer instructions. The one or more processors and the one or more memories are coupled, to implement the method described in the first aspect or the possible implementations. Alternatively, the first communications apparatus may include no memory, and at least one memory may be located outside the first communications apparatus. The one or more processors, the one or more memories, and the communications interface are coupled, to implement the method described in the first aspect or the possible implementations. For example, the first communications apparatus may further include one or more computer programs, the one or more computer programs are stored in the one or more memories, and the one or more computer programs include computer instructions. When the one or more processors execute the computer instructions stored in the one or more memories, the first communications apparatus is enabled to perform the method in any one of the first aspect or the possible implementations of the first aspect. For example, the first communications apparatus is a communications device, or is a chip or another component disposed in the communications device. For example, the communications device is a terminal device.

For example, if the first communications apparatus is the communications device, the communications interface is implemented by a transceiver (or a transmitter and a receiver) in the communications device. For example, the transceiver is implemented by an antenna, a feeder, and a codec in the communications device. Alternatively, if the first communications apparatus is the chip disposed in the communications device, the communications interface is, for example, an input/output interface such as an input/output pin in the chip. The communications interface is connected to a radio frequency transceiver component in the communications device, to receive and send information by using the radio frequency transceiver component.

According to a twelfth aspect, a communications apparatus is provided. The communications apparatus is, for example, the second communications apparatus described above. The communications apparatus includes one or more processors, and optionally, may further include a communications interface. The communications interface may be configured to communicate with another apparatus or device. Optionally, the second communications apparatus may further include one or more memories, configured to store computer instructions. The one or more processors and the one or more memories are coupled, to implement the method described in the second aspect or the possible implementations of the second aspect. Alternatively, the second communications apparatus may include no memory, and one or more memories may be located outside the second communications apparatus. The one or more processors, the one or more memories, and the communications interface are coupled, to implement the method described in the second aspect or the possible implementations of the second aspect. For example, the second communications apparatus may further include one or more computer programs, the one or more computer programs are stored in the one or more memories, and the one or more computer programs include computer instructions. When the one or more processors execute the computer instructions stored in the one or more memories, the second communications apparatus is enabled to perform the method in any one of the second aspect or the possible implementations of the second aspect. For example, the second communications apparatus is a communications device, or is a chip or another component disposed in the communications device. For example, the communications device is a network device. For example, the network device is an access network device.

For example, if the second communications apparatus is the communications device, the communications interface is implemented by a transceiver (or a transmitter and a receiver) in the communications device. For example, the transceiver is implemented by an antenna, a feeder, and a codec in the communications device. Alternatively, if the second communications apparatus is the chip disposed in the communications device, the communications interface is, for example, an input/output interface such as an input/output pin in the chip. The communications interface is connected to a radio frequency transceiver component in the communications device, to receive and send information by using the radio frequency transceiver component.

According to a thirteenth aspect, a communications apparatus is provided. The communications apparatus is, for example, the third communications apparatus described above. The communications apparatus includes one or more processors, and optionally, may further include a communications interface. The communications interface may be configured to communicate with another apparatus or device. Optionally, the third communications apparatus may further include one or more memories, configured to store computer instructions. The one or more processors and the one or more memories are coupled, to implement the method described in the third aspect or the possible implementations of the third aspect. Alternatively, the third communications apparatus may include no memory, and one or more memories may be located outside the third communications apparatus. The one or more processors, the one or more memories, and the communications interface are coupled, to implement the method described in the third aspect or the possible implementations of the third aspect. For example, the third communications apparatus may further include one or more computer programs, the one or more computer programs are stored in the one or more memories, and the one or more computer programs include computer instructions. When the one or more processors execute the computer instructions stored in the one or more memories, the third communications apparatus is enabled to perform the method in any one of the third aspect or the possible implementations of the third aspect. For example, the third communications apparatus is a communications device, or is a chip or another component disposed in the communications device. For example, the communications device is a core network device.

For example, if the third communications apparatus is the communications device, the communications interface is implemented by a transceiver (or a transmitter and a receiver) in the communications device. For example, the transceiver is implemented by an antenna, a feeder, and a codec in the communications device. Alternatively, if the third communications apparatus is the chip disposed in the communications device, the communications interface is, for example, an input/output interface such as an input/output pin in the chip. The communications interface is connected to a radio frequency transceiver component in the communications device, to receive and send information by using the radio frequency transceiver component.

According to a fourteenth aspect, a communications apparatus is provided. The communications apparatus is, for example, the fourth communications apparatus described above. The communications apparatus includes one or more processors, and optionally, may further include a communications interface. The communications interface may be configured to communicate with another apparatus or device. Optionally, the fourth communications apparatus may further include one or more memories, configured to store computer instructions. The one or more processors and the one or more memories are coupled, to implement the method described in the fourth aspect or the possible implementations of the fourth aspect. Alternatively, the fourth communications apparatus may include no memory, and one or more memories may be located outside the fourth communications apparatus. The one or more processors, the memory, and the communications interface are coupled, to implement the method described in the fourth aspect or the possible implementations of the fourth aspect. For example, the fourth communications apparatus may further include one or more computer programs, the one or more computer programs are stored in the one or more memories, and the one or more computer programs include computer instructions. When the one or more processors execute the computer instructions stored in the one or more memories, the fourth communications apparatus is enabled to perform the method in any one of the fourth aspect or the possible implementations of the fourth aspect. For example, the fourth communications apparatus is a communications device, or is a chip or another component disposed in the communications device. For example, the communications device is a terminal device.

For example, if the fourth communications apparatus is the communications device, the communications interface is implemented by a transceiver (or a transmitter and a receiver) in the communications device. For example, the transceiver is implemented by an antenna, a feeder, and a codec in the communications device. Alternatively, if the fourth communications apparatus is the chip disposed in the communications device, the communications interface is, for example, an input/output interface such as an input/output pin in the chip. The communications interface is connected to a radio frequency transceiver component in the communications device, to receive and send information by using the radio frequency transceiver component.

According to a fifteenth aspect, a communications apparatus is provided. The communications apparatus is, for example, the fifth communications apparatus described above. The communications apparatus includes one or more processors, and optionally, may further include a communications interface. The communications interface may be configured to communicate with another apparatus or device. Optionally, the fifth communications apparatus may further include one or more memories, configured to store computer instructions. The one or more processors and the one or more memories are coupled, to implement the method described in the fifth aspect or the possible implementations of the fifth aspect. Alternatively, the fifth communications apparatus may include no memory, and one or more memories may be located outside the fifth communications apparatus. The one or more processors, the one or more memories, and the communications interface are coupled, to implement the method described in the fifth aspect or the possible implementations of the fifth aspect. For example, the fifth communications apparatus may further include one or more computer programs, the one or more computer programs are stored in the one or more memories, and the one or more computer programs include computer instructions. When the one or more processors execute the computer instructions stored in the one or more memories, the fifth communications apparatus is enabled to perform the method in any one of the fifth aspect or the possible implementations of the fifth aspect. For example, the fifth communications apparatus is a communications device, or is a chip or another component disposed in the communications device. For example, the communications device is a network device. For example, the network device is an access network device or a core network device.

For example, if the fifth communications apparatus is the communications device, the communications interface is implemented by a transceiver (or a transmitter and a receiver) in the communications device. For example, the transceiver is implemented by an antenna, a feeder, and a codec in the communications device. Alternatively, if the fifth communications apparatus is the chip disposed in the communications device, the communications interface is, for example, an input/output interface such as an input/output pin in the chip. The communications interface is connected to a radio frequency transceiver component in the communications device, to receive and send information by using the radio frequency transceiver component.

According to a sixteenth aspect, a first communications system is provided. The first communications system includes the communications apparatus in the sixth aspect or the communications apparatus in the eleventh aspect.

Optionally, the first communications system further includes the communications apparatus in the seventh aspect or the communications apparatus in the twelfth aspect.

Optionally, the first communications system further includes the communications apparatus in the eighth aspect or the communications apparatus in the thirteenth aspect.

According to a seventeenth aspect, a second communications system is provided. The second communications system includes the communications apparatus in the ninth aspect or the communications apparatus in the fourteenth aspect, and includes the communications apparatus in the tenth aspect or the communications apparatus in the fifteenth aspect.

According to an eighteenth aspect, a computer-readable storage medium is provided. The computer-readable storage medium is configured to store a computer program, and when the computer program is run on a computer, the computer is enabled to perform the method in any one of the first aspect and the possible implementations of the first aspect.

According to a nineteenth aspect, a computer-readable storage medium is provided. The computer-readable storage medium is configured to store a computer program, and when the computer program is run on a computer, the computer is enabled to perform the method in any one of the second aspect and the possible implementations of the second aspect.

According to a twentieth aspect, a computer-readable storage medium is provided. The computer-readable storage medium is configured to store a computer program, and when the computer program is run on a computer, the computer is enabled to perform the method in any one of the third aspect and the possible implementations of the third aspect.

According to a twenty-first aspect, a computer-readable storage medium is provided. The computer-readable storage medium is configured to store a computer program, and when the computer program is run on a computer, the computer is enabled to perform the method in any one of the fourth aspect and the possible implementations of the fourth aspect.

According to a twenty-second aspect, a computer-readable storage medium is provided. The computer-readable storage medium is configured to store a computer program, and when the computer program is run on a computer, the computer is enabled to perform the method in any one of the fifth aspect and the possible implementations of the fifth aspect.

According to a twenty-third aspect, a computer program product including instructions is provided. The computer program product is configured to store a computer program, and when the computer program is run on a computer, the computer is enabled to perform the method in any one of the first aspect or the possible implementations of the first aspect.

According to a twenty-fourth aspect, a computer program product including instructions is provided. The computer program product is configured to store a computer program, and when the computer program is run on a computer, the computer is enabled to perform the method in any one of the second aspect or the possible implementations of the second aspect.

According to a twenty-fifth aspect, a computer program product including instructions is provided. The computer program product is configured to store a computer program, and when the computer program is run on a computer, the computer is enabled to perform the method in any one of the third aspect or the possible implementations of the third aspect.

According to a twenty-sixth aspect, a computer program product including instructions is provided. The computer program product is configured to store a computer program, and when the computer program is run on a computer, the computer is enabled to perform the method in any one of the fourth aspect or the possible implementations of the fourth aspect.

According to a twenty-seventh aspect, a computer program product including instructions is provided. The computer program product is configured to store a computer program, and when the computer program is run on a computer, the computer is enabled to perform the method in any one of the fifth aspect or the possible implementations of the fifth aspect.

In embodiments of this application, if there is no paging message for the first terminal device on a PO, the first terminal device does not perform monitoring in the first paging transmission window, to reduce power consumption of the terminal device.

### BRIEF DESCRIPTION OF DRAWINGS

FIG. 1A shows an example in which a terminal device receives a paging message based on an eDRX cycle;
FIG. 1B shows another example in which a terminal device receives a paging message based on an eDRX cycle;
FIG. 2 is a schematic diagram of an application scenario according to an embodiment of this application;
FIG. 3A and FIG. 3B are a flowchart of a first communication method according to an embodiment of this application;
FIG. 4A and FIG. 4B are a flowchart of a second communication method according to an embodiment of this application;
FIG. 5A and FIG. 5B are a flowchart of a third communication method according to an embodiment of this application;
FIG. 6 is a flowchart of a fourth communication method according to an embodiment of this application;
FIG. 7A is a schematic diagram of remaining power of a terminal device;
FIG. 7B is a schematic diagram of remaining power of a terminal device after a period of time when a method provided in embodiments of this application is not used;
FIG. 7C is a schematic diagram of remaining power of a terminal device after a period of time when a method provided in embodiments of this application is used;
FIG. 8 is a schematic block diagram of a first terminal device according to an embodiment of this application;
FIG. 9 is a schematic block diagram of an access network device according to an embodiment of this application;
FIG. 10 is a schematic block diagram of a core network device according to an embodiment of this application;
FIG. 11 is a schematic block diagram of a terminal device according to an embodiment of this application;
FIG. 12 is a schematic block diagram of a network device according to an embodiment of this application;
FIG. 13 is a schematic block diagram of a communications apparatus according to an embodiment of this application;
FIG. 14 is another schematic block diagram of a communications apparatus according to an embodiment of this application;
FIG. 15 is still another schematic block diagram of a communications apparatus according to an embodiment of this application; and
FIG. 16 is yet another schematic block diagram of a communications apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms in embodiments of this application, to facilitate understanding by a person skilled in the art.
(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network over a radio access network (radio access network, RAN), and exchange a voice or data with the RAN, or interact a voice and data with the RAN. The terminal device may include user equipment (user equipment, UE), a wireless terminal device, a mobile terminal device, a device-to-device (device-to-device, D2D) terminal device, a vehicle-to-everything (vehicle to everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, a radio frequency identification (radio frequency identification, RFID) reader, a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn or integrated into clothes or accessories of a user. The wearable device is more than a hardware device, and is used to implement powerful functions through software support, data exchange, and cloud interaction. In a broad sense, the wearable intelligent device includes a full-featured and large-sized device that can implement all or some of functions without depending on a smartphone, for example, a smart watch or smart glasses, and includes a device that focuses on only one type of application function and needs to collaboratively work with another device such as the smartphone, for example, various smart bands, smart helmets, or smart jewelry for monitoring physical signs.

If the terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

(2) Network device: The network device includes, for example, an access network (access network, AN) device such as a base station (for example, an access point), and may be a device that is in an access network and that communicates with a wireless terminal device through one or more cells on an air interface. Alternatively, a network device in a vehicle-to-everything (vehicle-to-everything, V2X) technology is, for example, a road side unit (road side unit, RSU). The base station may be configured to perform mutual conversion between a received over-the-air frame and an IP packet, to serve as a router between a terminal device and the remaining part of the access network, where the remaining part of the access network may include an IP network. The RSU may be a fixed infrastructure entity that supports a V2X application, and may exchange a message with another entity that supports the V2X application. The network device may further coordinate attribute management of the air interface. For example, the network device may include an evolved NodeB (NodeB, eNB, or e-NodeB, evolutional Node B) in an LTE system or a long term evolution-advanced (long term evolution-advanced, LTE-A) system, or may include a next generation NodeB (next generation node B, gNB) in a fifth generation (the 5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in embodiments of this application.

The network device may further include a core network device. In embodiments of this application, the core network device includes, for example, an access and mobility management function (access and mobility management function, AMF) or a user plane function (user plane function, UPF) in a 5G system, or includes a mobility management entity (mobility management entity, MME) in a 4G system.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) DRX: Simply speaking, in a DRX mechanism, a terminal device may periodically enter a sleep state, and does not need to monitor a physical downlink control channel (physical downlink control channel, PDCCH).

(4) Extended discontinuous reception (extended DRX, eDRX): Compared with DRX, eDRX has a longer DRX cycle, that is, a terminal device may periodically "sleep" for a longer time and "wake up" again. One eDRX cycle includes one paging transmission window (paging transmission window, PTW), and the PTW includes one or more POs. In one eDRX cycle, the terminal device "wakes up" on one or more POs in a PTW to monitor a PDCCH, and does not need to monitor the PDCCH in a period of time of "sleep".

(5) RRC state: A terminal device has three RRC states: an RRC connected (connected) state, an RRC idle state, and an RRC inactive state.

RRC connected state (which may also be referred to as a connected state for short, where in this specification, the "connected state" and the "RRC connected state" are a same concept, and may be interchanged): The terminal device establishes an RRC connection to a network, and may transmit data.

RRC idle state (which may also be referred to as an idle state for short, where in this specification, the "idle state" and the "RRC idle state" are a same concept, and may be interchanged): The terminal device does not establish an RRC connection to a network, and a base station does not store a context of the terminal device. If the terminal device needs to enter the RRC connected state from the RRC idle state, the terminal device needs to initiate an RRC connection establishment process.

RRC inactive state (which may also be referred to as an inactive state for short, where in this specification, the "inactive state" and the "RRC inactive state" are a same concept, and may be interchanged): The terminal device previously enters the RRC connected state through an anchor base station. Then, the anchor base station releases the RRC connection, but stores the context of the terminal device. If the terminal device needs to enter the RRC connected state from the RRC inactive state again, the terminal device needs to initiate an RRC connection resume process (or referred to as an RRC connection reestablishment process) through a base station on which the terminal device currently camps. Because the terminal device may be in a moving state, the base station on which the terminal device currently camps and the anchor base station of the terminal device may be a same base station, or may be different base stations. Compared with the RRC establishment process, the RRC resume process has a shorter delay and lower signaling overheads. However, the base station needs to store the context of the terminal device. This causes storage overheads of the base station.

(6) The terms "system" and "network" in embodiments of this application may be used interchangeably. "At least one" means one or more, and "a plurality of' means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following" or a similar expression thereof indicates "any combination of the following", including "one or any combination of the following". For example, at least one of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first paging transmission window and a second paging transmission window are merely used to distinguish between different paging transmission windows, but do not indicate different lengths, time domain locations, priorities, or importance degrees of the two paging transmission windows.

The foregoing describes some noun concepts used in embodiments of this application. The following describes technical features of embodiments of this application.

The 5G NR technology inherits the DRX mechanism in the LTE system. The DRX mechanism includes a DRX cycle. A terminal device in an RRC connected state periodically "wakes up" for a period of time in the DRX cycle. The time in which the terminal device "wakes up" is referred to as an on duration (on duration) time period. In a time other than the on duration time period in the DRX cycle, the terminal device may keep in a "sleep" state, to reduce power consumption. In addition, when the terminal device is in an RRC idle state or an RRC inactive state, if a core network or a base station needs to send downlink data to the terminal device, for example, a call needs to be made to the terminal device, or downlink data needs to be sent to the terminal device, the core network or the base station first sends a paging message to the terminal device to page the terminal device. After receiving the paging message, the terminal device initiates an RRC connection establishment process to receive the downlink data.

A terminal device in an RRC idle state or an RRC inactive state "wakes up" only on a PO of the terminal device to receive a paging message. The terminal device first receives, on the PO of the terminal device, downlink control information (downlink control information, DCI) used to indicate the paging message, and the DCI may be sent on a physical downlink control channel (physical downlink control channel, PDCCH). The DCI may also be referred to as paging control information, and the paging control information is used to indicate a time-frequency resource for sending the paging message. After receiving the paging control information, the terminal device receives the paging message. If the paging message carries an ID of the terminal device, it indicates that the terminal device is paged, and the terminal device needs to initiate an RRC connection establishment process to access the base station, to receive the downlink data. Alternatively, if the paging message does not carry the ID of the terminal device, it indicates that the terminal device is not paged, and the terminal device may continue to "sleep" and "wake up" on a next PO.

If a terminal device for which DRX is configured is in an RRC idle state or an RRC inactive state, the terminal device "wakes up" on a PO included in the DRX cycle to receive a paging message.

To further reduce power consumption, an eDRX mechanism is introduced to the DRX mechanism, and eDRX is equivalent to extending the DRX cycle to a larger value. In other words, the terminal device may "sleep" for a longer time and "wake up" again. Because the terminal device "sleeps" for a longer time in the eDRX mechanism, higher reliability needs to be ensured each time the terminal device "wakes up" to receive a paging message, to avoid a delay caused by sleeping for one more eDRX cycle. Therefore, a PTW is introduced to eDRX. One eDRX cycle includes one PTW, and the PTW includes one or more POs. In one eDRX cycle, the terminal device "wakes up" on one or more POs in a PTW to receive a paging message . The terminal device may first detect paging control information on each PO. If the paging control information is detected, the terminal device may continue to detect a paging message on the PO. If the paging message includes an ID of the terminal device, the terminal device does not need to detect the remaining POs in the PTW. If the paging message does not include the ID of the terminal device, the terminal device detects the paging control information on a next PO, and so on, until a paging message including the ID of the terminal device is successfully received or the PTW ends. If the terminal device does not detect the paging control information on a PO, the terminal device does not detect the paging message on the PO, but detects the paging control information on a next PO, and so on, until a paging message including the ID of the terminal device is successfully received or the PTW ends.

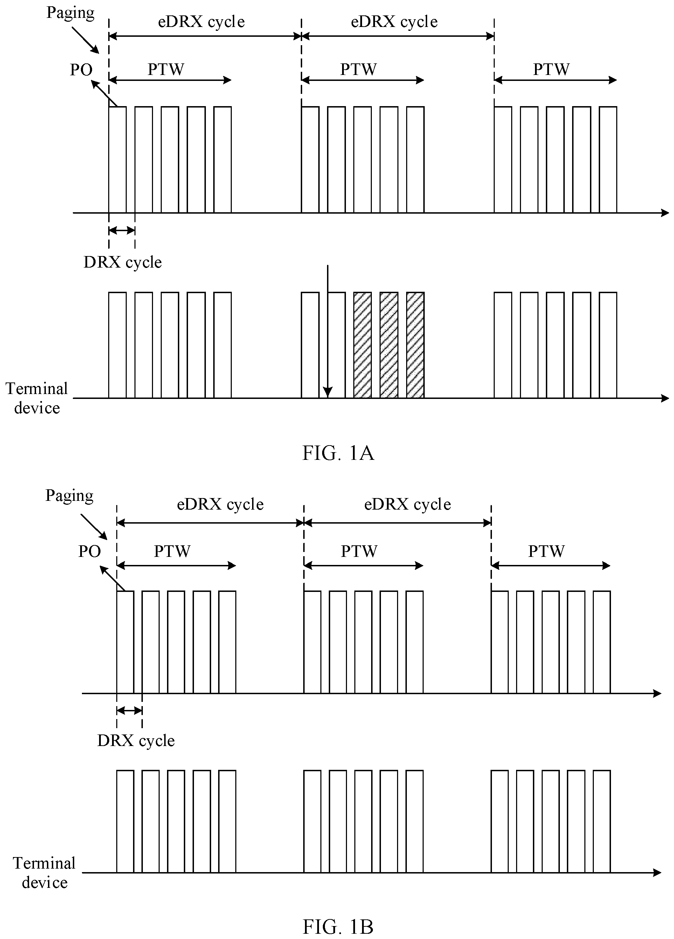

For example, FIG. 1A shows an example in which a terminal device receives a paging message based on an eDRX cycle. FIG. 1A uses an example in which one PTW includes five POs, and FIG. 1A provides three PTWs. In FIG. 1A, an upper part represents a part corresponding to the base station or the core network device, and a lower part represents a part corresponding to the terminal device. For example, the base station or the core network device sends paging control information on each PO in each PTW. The terminal device fails to detect the paging control information on the 1^{st} PO in the 2^{nd} PTW, but the terminal device successfully detects the paging control information on the 2^{nd} PO (shown by an arrow in FIG. 1A), and detects a paging message including an ID of the terminal device. In FIG. 1A, an example in which the terminal device is paged by using the paging control information is used. In this case, the terminal device may not need to perform detection on the remaining three POs in the 2^{nd} PTW. In FIG. 1A, slashed boxes corresponding to a UE side indicates three POs on which the terminal device does not need to perform detection. However, if the terminal device is not paged by using the paging control information, that is, the paging message does not include the ID of the terminal device, the terminal device further needs to continue to perform detection on the remaining POs in the 2^{nd} PTW.

For another example, FIG. 1B shows another example in which a terminal device receives a paging message based on an eDRX cycle. FIG. 1B also uses an example in which one PTW includes five POs, and FIG. 1B provides three PTWs. In FIG. 1B, an upper part represents a part corresponding to the base station or the core network device, and a lower part represents a part corresponding to the terminal device. For example, the base station or the core network does not send any paging control information or paging message in the three PTWs, that is, does not page any terminal device. However, the terminal device still needs to detect paging control information on each PO in the three PTWs. Alternatively, neither paging control information nor a paging message sent by the base station or the core network device in the three PTWs is sent to a terminal device 1, that is, there may be a paging message sent to a terminal device other than the terminal device 1. However, because the terminal device 1 has not detected a paging message including an ID of the terminal device 1, the terminal device 1 still needs to detect paging control information on each PO in the three PTWs.

It can be learned that, in one PTW, all terminal devices may not be paged, that is, the base station or the core network does not send a paging message in the PTW. However, all the terminal devices still need to monitor all POs in the PTW, to determine whether the terminal devices are paged. However, in this case, it is clear that the terminal device does not receive a paging message. This is unnecessary, and consequently a waste of power is caused. Alternatively, in one PTW, only some terminal devices are paged, but another terminal device that is not paged still needs to monitor all POs in the PTW, to determine whether the terminal device is paged. However, in this case, it is clear that the another terminal device that is not paged does not receive a paging message including an ID of the terminal device. This is unnecessary, and consequently power consumption is increased.

In view of this, the technical solutions in embodiments of this application are provided. In some embodiments provided in this application, if there is no paging message for a first terminal device on a PO, the first terminal device does not perform monitoring in a first paging transmission window, for example, the first terminal device does not perform monitoring on the remaining POs included in the first paging transmission window, to reduce power consumption of the terminal device. For example, a paging message sent to the first terminal device in the first paging transmission window remains unchanged. In this case, if there is no paging message for the first terminal device on a PO, there is no paging message for the first terminal device on the remaining POs other than the PO in the first paging transmission window. In this case, the first terminal device does not perform monitoring in the first paging transmission window, and receiving of the paging message by the first terminal device is not affected.

In some other embodiments provided in this application, if there is no paging message in a first paging transmission window, a network device may send paging control information, where the paging control information may indicate that there is no paging message in the first paging transmission window. In this way, after receiving the paging control message, a terminal device does not need to perform monitoring on the remaining POs in the first paging transmission window, to reduce power consumption of the terminal device.

The technical solutions provided in embodiments of this application may be applied to a fourth generation (4th generation, 4G) system, for example, an LTE system, or may be applied to a 5G system, for example, an NR system, or may be applied to a next generation mobile communications system or another similar communications system. This is not specifically limited.

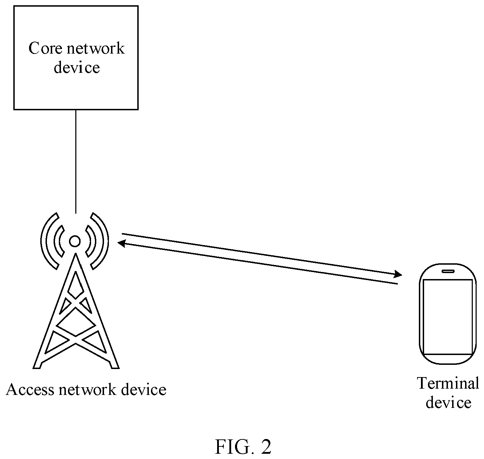

FIG. 2 shows an application scenario according to an embodiment of this application. FIG. 2 includes an access network device, a core network device, and a terminal device. For example, the terminal device is in an RRC idle state or an RRC inactive state. The access network device can page the terminal device, and the core network device can also page the terminal device.

For example, the access network device and the core network device work in an evolved universal mobile telecommunications system terrestrial radio access (evolved UMTS terrestrial radio access, E-UTRA) system, or work in an NR system, or work in a next generation communications system or another communications system.

The core network device in FIG. 2 is, for example, an MME in a 4G system, or an AMF in a 5G system, or a corresponding core network device in a next generation communications system or another communications system.

The access network device in FIG. 2 is, for example, a base station. The access network device corresponds to different devices in different systems. For example, the access network device may correspond to an eNB in the 4G system, and corresponds to an access network device, for example, a gNB, in the 5G system. Certainly, the technical solutions provided in embodiments of this application may also be applied to a future mobile communications system. Therefore, the access network device in FIG. 2 may also correspond to a network device in the future mobile communications system. In FIG. 2, an example in which the access network device is the base station is used. Actually, with reference to the foregoing descriptions, the access network device may alternatively be a device such as an RSU. In addition, in FIG. 2, an example in which the terminal device is a mobile phone is used. Actually, based on the foregoing descriptions of the terminal device, the terminal device in embodiments of this application is not limited to the mobile phone.

With reference to the accompanying drawings, the following describes a method provided in embodiments of this application. In embodiments of this application, a paging transmission window is, for example, a PTW, or may have another name, provided that the paging transmission window includes one or more paging occasions used to receive a paging message.

This problem is considered first. Currently, if a terminal device successfully receives paging control information and a paging message on a PO in the PTW, if the paging message does not include an ID of the terminal device, the terminal device needs to continue to monitor the remaining POs in the PTW. This behavior is considering that the paging message for the terminal device may arrive in the PTW. Although there is no paging message for the terminal device on some POs located before the PTW, the paging message for the terminal device may appear on some POs located after the PTW. Therefore, the terminal device needs to monitor all POs in the PTW until a paging message including the ID of the terminal device is detected or the PTW ends. However, in most cases, paging messages sent on all POs included in one PTW are the same. If there is no paging message for the terminal device on some POs located before the PTW, there is a high probability that the paging message for the terminal device does not appear on some POs located after the PTW. In other words, if it is determined that the terminal device is not paged on a PO, monitoring a subsequent PO is redundant and unnecessary, causing a waste of power.

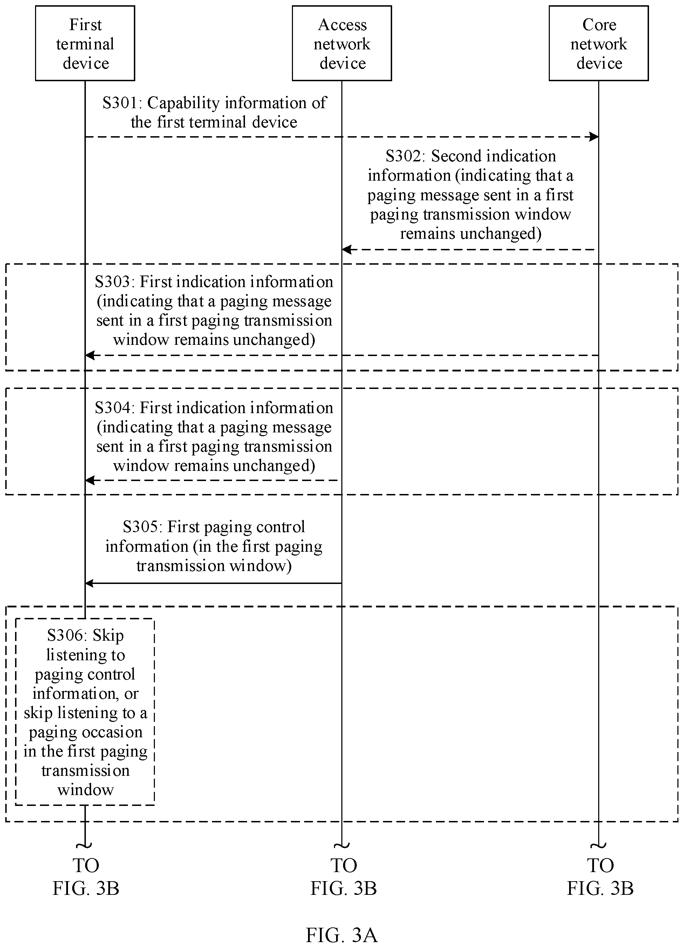

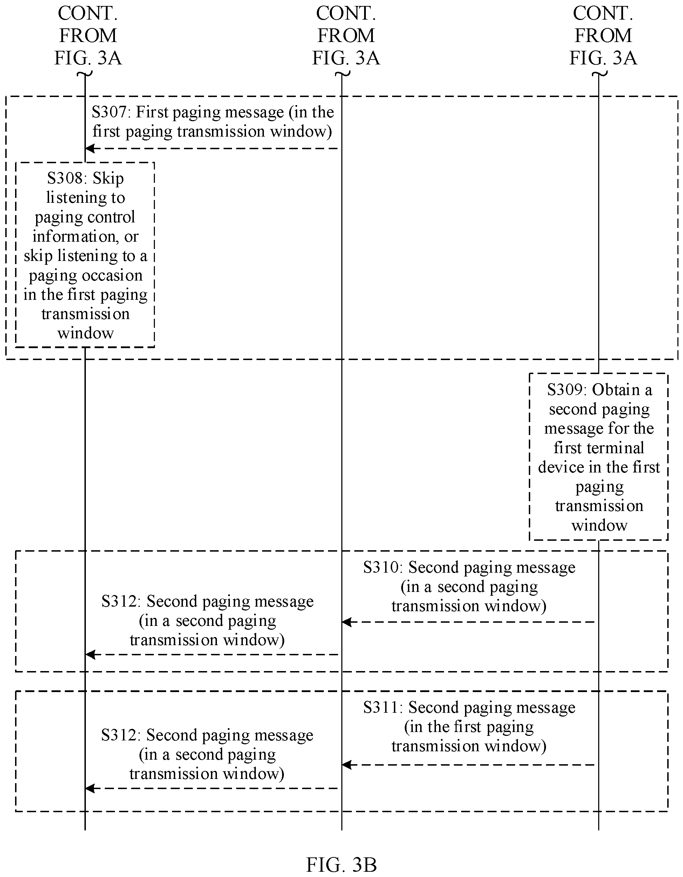

In view of this, an embodiment of this application provides a first communication method. According to the method, power consumption of a terminal device can be reduced. FIG. 3A and FIG. 3B are a flowchart of the method. In the following description process, an example in which the method is applied to the network architecture shown in FIG. 2 is used. In this embodiment of this application, the terminal device is, for example, in an RRC idle state, and the following paging may be considered as paging initiated by a core network device.

For ease of description, an example in which the method is performed by the core network device, an access network device, and the terminal device is used below. For example, this embodiment of this application is applied to the network architecture shown in FIG. 2. Therefore, the following core network device may be the core network device in the network architecture shown in FIG. 2, the following access network device may be the access network device in the network architecture shown in FIG. 2, and the following terminal device may be the terminal device in the network architecture shown in FIG. 2.

S301: A first terminal device sends capability information of the first terminal device to the core network device, and the core network device receives the capability information from the first terminal device.

In this embodiment of this application, the first terminal device may send the capability information of the first terminal device to the core network device, so that the core network device determines, based on the capability information of the first terminal device, whether the first terminal device supports a paging message sent in a first paging transmission window in remaining unchanged. Alternatively, a plurality of terminal devices in a first cell (for example, some or all of the terminal devices in the first cell) may send respective capability information to the core network device, so that the core network device can determine, based on the capability information of the plurality of terminal devices, whether the terminal devices in the first cell support paging messages sent in the first paging transmission window in remaining unchanged. For example, the first cell is a serving cell of the first terminal device. If the plurality of terminal devices in the first cell send respective capability information to the core network device, the first terminal device may be one of some or all of the terminal devices. In other words, in this case, only an example in which the first terminal device sends the capability information of the first terminal device to the core network device is used in S301.

The first paging transmission window includes, for example, one or more paging transmission windows. The paging transmission window is, for example, a PTW, or may be understood as a time window. One time window may include one or more POs. For example, a current time is before a start moment of a paging transmission window (for example, referred to as a paging transmission window 1) included in an eDRX cycle. If a start moment of a paging transmission window included in an eDRX cycle is the same as the start moment of the eDRX cycle, it may also be considered that the current time is beyond the eDRX cycle, for example, the current time is between two eDRX cycles. Alternatively, if a start moment of a paging transmission window included in an eDRX cycle is different from the start moment of the eDRX cycle, for example, the start moment of the paging transmission window is after the start moment of the eDRX cycle, the current time may be within the eDRX cycle but beyond the paging transmission window, or the current time may be beyond the eDRX cycle, for example, the current time is between two eDRX cycles. In this case, if the first paging transmission window includes one paging transmission window, the paging transmission window is, for example, the paging transmission window 1. Alternatively, if the first paging transmission window includes one paging transmission window, the paging transmission window may be any paging transmission window located after the paging transmission window 1. Alternatively, if the first paging transmission window includes a plurality of paging transmission windows, the plurality of paging transmission windows may include the paging transmission window 1, and any one or more paging transmission windows located after the paging transmission window 1. Alternatively, if the first paging transmission window includes a plurality of paging transmission windows, the plurality of paging transmission windows may not include the paging transmission window 1, but includes any plurality of paging transmission windows located after the paging transmission window 1.

Alternatively, for example, a current time is before a start moment of any PO in a paging transmission window (for example, referred to as a paging transmission window 2) included in an eDRX cycle (which may be the 1^{st} PO in the paging transmission window, or may be a subsequent PO in the paging transmission window). If the first paging transmission window includes one paging transmission window, the paging transmission window is, for example, the paging transmission window 2. Alternatively, if the first paging transmission window includes one paging transmission window, the paging transmission window may be any paging transmission window located after the paging transmission window 2. Alternatively, if the first paging transmission window includes a plurality of paging transmission windows, the plurality of paging transmission windows may include the paging transmission window 2, and any one or more paging transmission windows located after the paging transmission window 2. Alternatively, if the first paging transmission window includes a plurality of paging transmission windows, the plurality of paging transmission windows may not include the paging transmission window 2, but includes any plurality of paging transmission windows located after the paging transmission window 2.

If a current time is before a start moment of the 1^{st} PO in a paging transmission window (for example, referred to as a paging transmission window 2) included in an eDRX cycle, there may be a plurality of cases of a time domain location of the current time. This is briefly described below.

Case 1: If a start moment of a paging transmission window included in an eDRX cycle is the same as the start moment of the eDRX cycle, and a start moment of the 1^{st} PO in the paging transmission window is the same as the start moment of the paging transmission window, it may be considered that the current time is beyond the eDRX cycle, for example, the current time is between two eDRX cycles.

Case 2: If a start moment of a paging transmission window included in an eDRX cycle is different from the start moment of the eDRX cycle, for example, the start moment of the paging transmission window is after the start moment of the eDRX cycle, and a start moment of the 1^{st} PO in the paging transmission window is the same as the start moment of the paging transmission window, the current time may be within the eDRX cycle but beyond the paging transmission window, or the current time may be beyond the eDRX cycle, for example, the current time is between two eDRX cycles.

Case 3: If a start moment of a paging transmission window included in an eDRX cycle is different from the start moment of the eDRX cycle, for example, the start moment of the paging transmission window is after the start moment of the eDRX cycle, and a start moment of the 1^{st} PO in the paging transmission window is different from the start moment of the paging transmission window, for example, the start moment of the 1^{st} PO in the paging transmission window is after the start moment of the paging transmission window, the current time may be within the eDRX cycle but beyond the paging transmission window, or the current time may be within the eDRX cycle and within the paging transmission window, or the current time may be beyond the eDRX cycle, for example, the current time is between two eDRX cycles.

Case 4: If a start moment of a paging transmission window included in an eDRX cycle is the same as the start moment of the eDRX cycle, and a start moment of the 1^{st} PO in the paging transmission window is different from the start moment of the paging transmission window, for example, the start moment of the 1^{st} PO in the paging transmission window is after the start moment of the paging transmission window, the current time may be within the eDRX cycle and within the paging transmission window, or the current time may be beyond the eDRX cycle, for example, the current time is between two eDRX cycles.

It should be noted that whether the terminal device supports the paging message sent in the first paging transmission window in remaining unchanged may be understood as whether the terminal device supports monitoring the paging message by using new behavior. The new behavior is specifically as follows: If the terminal device successfully receives paging control information and a paging message on a PO in the PTW, and the paging message does not include an ID of the terminal device, because the paging message sent in the PTW remains unchanged, it may be considered that a paging message subsequently received in the PTW does not include the ID of the terminal device, and the terminal device does not need to continue to monitor the remaining POs in the PTW.

Capability information of one terminal device may include, for example, power saving information, and the power saving information may indicate whether the terminal device has an energy saving requirement (or a power saving requirement). Certainly, the capability information of the terminal device may further include other information, for example, a parameter such as a quantity of antennas supported by the terminal device. Content included in the capability information of the terminal device is not limited in this embodiment of this application. If the power saving information included in the capability information of the terminal device indicates that the terminal device has an energy saving requirement, it may be considered that the capability information indicates that the terminal device supports monitoring a paging message by using new behavior. Therefore, the core network device may determine that, if a paging message sent to the terminal device in the first paging transmission window remains unchanged, power consumption of the terminal device can be reduced. Alternatively, if the power saving information included in the capability information of the terminal device indicates that the terminal device has no energy saving requirement, it may be considered that the capability information indicates that the terminal device does not support monitoring a paging message by using new behavior. Therefore, the core network device may determine that, if a paging message sent to the terminal device in the first paging transmission window remains unchanged, power consumption of the terminal device cannot be reduced. The core network device may determine, based on the capability information of the terminal device, whether the paging message sent by the core network device to the terminal device in the first paging transmission window changes.

In this case, if only the first terminal device sends the capability information of the first terminal device to the core network device, and power saving information included in the capability information of the first terminal device indicates that the first terminal device has an energy saving requirement, the core network device may determine that, when a paging message for the first terminal device is sent, the paging message sent to the first terminal device in the first paging transmission window remains unchanged. However, if the power saving information included in the capability information of the first terminal device indicates that the first terminal device has no energy saving requirement, the core network device may determine that, when a paging message for the first terminal device is sent, the paging message sent to the first terminal device in the first paging transmission window may change or remains unchanged. In this case, the paging message sent to the first terminal device in the first paging transmission window may change or remains unchanged, and power consumption for receiving the paging message by the first terminal device is not affected.

Alternatively, if a plurality of terminal devices in the first cell send respective capability information to the core network device, the core network device may receive the plurality of pieces of capability information. If power saving information included in each of the plurality of pieces of capability information received by the core network device indicates that a corresponding terminal device has an energy saving requirement, or power saving information included in half or more of the plurality of pieces of capability information received by the core network device indicates that corresponding terminal devices have an energy saving requirement, the core network device may determine that, when a paging message for the terminal device in the first cell is sent, the paging message sent in the first paging transmission window remains unchanged. In this case, it is considered that paging messages sent to all the terminal devices in the first cell in the first paging transmission window remain unchanged. Alternatively, if power saving information included in each of the plurality of pieces of capability information received by the core network device indicates that a corresponding terminal device has no energy saving requirement, or power saving information included in half or more of the plurality of pieces of capability information received by the core network device indicates that corresponding terminal devices have no energy saving requirement, the core network device may determine that, when a paging message for the terminal device in the first cell is sent, the paging message sent in the first paging transmission window may change or remains unchanged. In this case, the paging message sent to the first terminal device in the first paging transmission window may change or remains unchanged, and power consumption for receiving the paging message by the first terminal device is not affected. It should be noted that the first cell may include one or more cells or all cells of the access network device in which the terminal device is located. If the first cell includes all the cells of the access network device in which the terminal device is located, it indicates that paging messages sent to all terminal devices of the access network device in the first paging transmission window remain unchanged or may change.

For example, the first terminal device may add the capability information of the first terminal device to a non-access stratum (non-access stratum, NAS) message, and send the NAS message to the core network device. For example, the NAS message is a registration request (registration request) message, or may be another NAS message.

S302: The core network device sends second indication information to the access network device, and the access network device receives the second indication information from the core network device. The second indication information may indicate that a paging message sent in the first paging transmission window remains unchanged. If the second indication information is specific to the first terminal device, the second indication information may specifically indicate that a paging message sent to the first terminal device in the first paging transmission window remains unchanged. Alternatively, if the second indication information is specific to the first cell or a plurality of terminal devices in the first cell, the second indication information may specifically indicate that a paging message sent in the first paging transmission window in the first cell remains unchanged.

If the core network device determines that the first terminal device supports monitoring the paging message by using the new behavior, the core network device may send the second indication information to the access network device. However, if the core network device determines that the first terminal device does not support monitoring the paging message by using the new behavior, the core network device does not need to send the second indication information to the access network device. Alternatively, if the core network device determines that the first cell supports the paging message sent in the first paging transmission window in remaining unchanged, the core network device may send the second indication information to the access network device. However, if the access network device determines that the first cell does not support the paging message sent in the first paging transmission window in remaining unchanged, the core network device does not need to send the second indication information to the access network device.

Optionally, if the second indication information is specific to the first terminal device, the core network device may send the second indication information to the access network device when registration of the first terminal device is completed, to indicate that the paging message sent to the first terminal device in the first paging transmission window remains unchanged. Alternatively, if the second indication information is specific to the first cell, the core network device may send the second indication information to the access network device when registration of one of the plurality of terminal devices is completed, to indicate that the paging message sent in the first cell in the first paging transmission window remains unchanged. If this manner is used, after receiving the second indication information, the access network device needs to record an identifier of a terminal device corresponding to the second indication information, for example, an identity (ID) of the terminal device. If a paging message is subsequently received from the core network device, the access network device may determine whether an ID of a paged terminal device belongs to the recorded ID. If the ID of the paged terminal device belongs to the recorded ID, the access network device determines that the terminal device supports a paging message sent to the terminal device in the first paging transmission window in remaining unchanged. If the ID of the paged terminal device does not belong to the recorded ID, the access network device determines that the terminal device does not support the paging message sent to the terminal device in the first paging transmission window in remaining unchanged. The access network device needs to record corresponding information. Therefore, this manner has a relatively high requirement on the access network device. However, the core network device needs to send the second indication information to the access network device only once. This helps reduce signaling overheads.

Alternatively, the core network device may send the second indication information to the access network device each time a paging message is sent to the access network device. If the second indication information is specific to the first terminal device, the core network device may send the second indication information to the access network device each time there is a paging message for the first terminal device or each time it is determined that the first terminal device is not paged. In other words, the core network device may send the second indication information to the access network device when determining that the first terminal device is paged or not paged in the first paging transmission window. Herein, determining that the first terminal device is paged in the first paging transmission window is, for example, determining, for the first time, that the first terminal device is paged in the first paging transmission window, and determining that the first terminal device is not paged in the first paging transmission window is, for example, determining, for the first time, that the first terminal device is not paged in the first paging transmission window. The second indication information may indicate that a paging message sent to the first terminal device in the first paging transmission window remains unchanged. Alternatively, if the second indication information is specific to the first cell, the core network device may send the second indication information to the access network device each time there is a paging message for the terminal device in the first cell, to indicate that the paging message sent in the first cell in the first paging transmission window remains unchanged. Because the terminal device may be in a moving state, and an energy saving requirement of the terminal device is not necessarily constant, and may change with time, the terminal device may alternatively send updated capability information to the core network device. In this case, when there is a paging message for the terminal device, the core network device may determine, based on latest capability information of the terminal device, whether the terminal device supports the paging message sent to the terminal device in the first paging transmission window in remaining unchanged. If yes, the core network device sends the second indication information to the access network device, to better meet an actual requirement of the terminal device. In addition, the access network device does not need to record information such as an ID of the terminal device, to simplify logical implementation of the access network device.

S303: The core network device sends first indication information to the terminal device, and the terminal device receives the first indication information from the core network device. The first indication information may indicate that a paging message sent in the first paging transmission window remains unchanged, or indicate that a paging message sent to the first terminal device in the first paging transmission window remains unchanged.

S302 and S303 may be understood as that the core network device sends indication information, and the indication information may indicate that a paging message sent in the first paging transmission window remains unchanged. That the indication information may indicate that a paging message sent in the first paging transmission window remains unchanged may be understood as that the indication information indicates that a paging message sent to the first terminal device in the first paging transmission window remains unchanged, or indicates that a paging message in the first paging transmission window remains unchanged (in this case, it is considered that paging messages sent to all terminal devices in the first paging transmission window remain unchanged). The indication information includes the first indication information, or includes the second indication information, or includes the first indication information and the second indication information. In other words, that the core network device sends indication information may include: The core network device sends the first indication information to the terminal device. Alternatively, that the core network device sends indication information may include: The core network device sends the second indication information to the access network device. Alternatively, that the core network device sends indication information may include: The core network device sends the first indication information to the terminal device, and the core network device sends the second indication information to the access network device.

If the first indication information is specific to the first terminal device, the core network device may send the first indication information to the first terminal device, and the first terminal device receives the first indication information from the core network device. Alternatively, if the first indication information is specific to the first cell or a plurality of terminal devices in the first cell, the core network device may send the first indication information to the plurality of terminal devices, and each of the plurality of terminal devices receives the first indication information from the core network device. Because the plurality of terminal devices also include the first terminal device, an example in which the core network device sends the first indication information to the first terminal device, and the first terminal device receives the first indication information from the core network device is used in S303. The core network device may send the first indication information to a terminal device by using a NAS message.

S304: The access network device sends first indication information to the terminal device, and the terminal device receives the first indication information from the access network device. The first indication information may indicate that a paging message sent in the first paging transmission window remains unchanged, or indicate that a paging message sent to the first terminal device in the first paging transmission window remains unchanged.

S304 and S303 are parallel steps, and only one thereof is performed. If S302 and S303 are performed, S302 may be performed before S303, or S302 may be performed after S303, or S302 and S303 may be performed simultaneously. Alternatively, if S302 and S304 are performed, S302 may be performed before S304. Alternatively, both S304 and S303 may be performed.

In other words, the core network device may not send the first indication information to the terminal device, but the access network device may send the first indication information to the terminal device. For example, after the access network device receives the second indication information from the core network device, if the second indication information is specific to the first terminal device, the access network device may send the first indication information to the first terminal device, and the first terminal device receives the first indication information from the access network device. Alternatively, if the first indication information is specific to a plurality of terminal devices, the access network device may send the first indication information to the plurality of terminal devices, and each of the plurality of terminal devices may receive the first indication information from the access network device. Because the plurality of terminal devices also include the first terminal device, an example in which the access network device sends the first indication information to the first terminal device, and the first terminal device receives the first indication information from the access network device is used in S304.

If the access network device sends only the first indication information to the first terminal device, the first indication information may be sent in a unicast manner. For example, the access network device may add the first indication information to an RRC message for sending. For example, the RRC message is an RRC release (Release) message, and the access network device may add the first indication information to a suspend configuration (suspendConfig) field in the RRC release message.

If the access network device needs to send the first indication information to the plurality of terminal devices, the access network device may separately send the first indication information in a unicast manner, or may send the first indication information in a broadcast manner, to reduce a quantity of messages. If the access network device sends the first indication information in a broadcast manner, in an optional manner, the access network device may add the first indication information to system information (system information, SI) for sending. The SI may be carried in a system message, and the system message is, for example, a system information block 1 (system information block 1, SIB 1). If the first indication information is included in the SI, for example, the SI includes a first indicator field, the first indicator field may be used to carry the first indication information. In an optional implementation of the first indicator field, the first indicator field is a newly added indicator field in the SI. Alternatively, in another optional implementation of the first indicator field, the first indicator field is an existing indicator field in the SI. For example, the first indicator field is an indicator field (a hyper system frame number (hyper system frame number, HSFN) indicator field) used to indicate a hyper frame number, or an indicator field (an eDRX indicator field) used to indicate that the first cell supports eDRX. Alternatively, the first indicator field may be another existing indicator field in the SI.

S301 to S304 are optional steps, and are not necessarily performed. Therefore, S301 to S304 are represented by dashed lines in FIG. 3A and FIG. 3B.

S305: The access network device sends first paging control information in the first paging transmission window, and correspondingly, the first terminal device receives the first paging control information from the access network device in the first paging transmission window. Before the access network device sends the first paging control information, the access network device receives a paging message from the core network device. Certainly, there may be a plurality of terminal devices that may receive the first paging control information from the access network device. In FIG. 3A and FIG. 3B, only the first terminal device is used as an example.

For example, the first paging control information is DCI, or may be other information. Optionally, the access network device may send the first paging control information on each PO in the first paging transmission window. In this way, even if the terminal device does not detect the first paging control information on a PO, the terminal device may detect the first paging control information on a subsequent PO. Certainly, this is a specific implementation of the access network device. Alternatively, the access network device may not send the first paging control information on each PO in the first paging transmission window. For example, the access network device sends the first paging control information in the first paging transmission window based on a first cycle. A length of the first cycle is, for example, an integer multiple of a time interval between two adjacent POs. Alternatively, the access network device sends the first paging control information only on one or more POs in the first paging transmission window. For example, the access network device sends the first paging control information only on the 1^{st} PO in the first paging transmission window, or sends the first paging control information on the 1^{st} PO and a PO located in the middle in the first paging transmission window. In this embodiment of this application, a PO on which the access network device sends the first paging control information is not limited.

Optionally, the first paging control information may indicate that there is no paging message on a current PO. For example, the first paging control information does not indicate a paging message. For example, the first paging control information is DCI, and a value of a 2-bit field included in the DCI is "10" (refer to Table 1), indicating that the DCI includes only a short message field but does not include scheduling information of a paging message. In this case, it is considered that the first paging control information indicates that there is no paging message specific to any terminal device on the current PO. In this case, S306 is performed.

Alternatively, the first paging control information may indicate that there is a paging message on the current PO. For example, the first paging control information is DCI, and a value of a 2-bit field included in the DCI is "01" or " 11" (refer to Table 1), indicating that the DCI includes scheduling information of a paging message. In this case, S307 and S308 are performed. That is, only one of S306 and S307 and S308 is performed. Therefore, the two steps are both optional steps, and are represented by dashed lines in FIG. 3A and FIG. 3B.

The current PO is a PO on which the first paging control information is located.

S306: The first terminal device does not monitor paging control information in the first paging transmission window, or does not monitor a paging occasion in the first paging transmission window.

After the first terminal device receives the first paging control information, if the first paging control information indicates that there is no paging message on the current PO, the first terminal device may determine that there is no paging message corresponding to the first terminal device on the current PO, or determine that the first terminal device is not paged on the current PO. Because the first terminal device has obtained the first indication information and determines that the paging message corresponding to the first terminal device in the first paging transmission window remains unchanged, the first terminal device is not paged on the current PO, and is not paged on the remaining POs in the first paging transmission window. Therefore, the first terminal device does not monitor the remaining POs included in the first paging transmission window. The remaining POs included in the first paging transmission window may include a PO that is in the first paging transmission window and that has not been monitored other than a PO that has been monitored by the first terminal device.

In addition, skipping monitoring a PO herein may be skipping monitoring the paging control information on the PO. However, if the paging control information is not monitored, the paging message is not monitored. Therefore, skipping monitoring the PO herein may also be skipping monitoring the paging control information and the paging message on the PO. Alternatively, if the paging control information and the paging message are not monitored on a PO, it indicates that monitoring is not performed on the PO, that is, it indicates that a PDCCH is not monitored on the PO. Therefore, skipping monitoring a PO herein may be skipping performing monitoring on the PO.

S307: The access network device sends a first paging message in the first paging transmission window, and correspondingly, the first terminal device receives the first paging message from the access network device in the first paging transmission window. Certainly, because the first paging control information indicates a paging message, there may be a plurality of terminal devices that may receive the first paging message from the access network device. In FIG. 3A and FIG. 3B, only the first terminal device is used as an example.

Specifically, the access network device sends the first paging message after sending the first paging control information in the first paging transmission window. After the first terminal device receives the first paging control information from the access network device in the first paging transmission window, because the first paging control information indicates the paging message, the first terminal device receives the first paging message from the access network device. The first terminal device decodes the received first paging message, and determines whether the first paging message includes an ID of the first terminal device. In this embodiment of this application, for example, if the first paging message does not include the ID of the first terminal device, the first paging message may indicate that the first terminal device is not paged on the current PO.

Optionally, the first paging message may indicate that a second terminal device is paged. This is equivalent to that the first paging message is not used to page the first terminal device, but may be used to page another terminal device, to improve utilization of the first paging message.

S308: The first terminal device does not monitor paging control information in the first paging transmission window, or does not monitor a paging occasion in the first paging transmission window.

For S308, refer to the descriptions of S306.

S309: The core network device obtains a second paging message for the first terminal device in the first paging transmission window.

The access network device has sent the first paging control information to indicate that there is no paging message on the current PO, or has sent the first paging message to indicate that the first terminal device is not paged on the current PO, but the core network device obtains another paging message for the first terminal device, for example, the second paging message. S309 may be performed before S306 (or S308) or after S306 (or S308), or S309 and S306 (or S308) may be performed simultaneously. After S309, S310 may be performed, or S311 may be performed. Therefore, S310 and S311 are optional steps, and are represented by dashed lines in FIG. 3A and FIG. 3B.

S310: The core network device sends the second paging message in a second paging transmission window, and the access network device receives the second paging message from the core network device. After S310, S312 may be performed. Certainly, there may be a plurality of terminal devices that may receive the second paging message from the access network device. In FIG. 3A and FIG. 3B, only the first terminal device is used as an example.

The second paging transmission window may be located after the first paging transmission window in time domain. For example, the second paging transmission window is a next paging transmission window of the first paging transmission window in time domain. Alternatively, the first paging transmission window and the second paging transmission window are two adjacent paging transmission windows in time domain.

If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, although the core network device obtains the second paging message for the first terminal device in the first paging transmission window, the core network device does not send the second paging message in the first paging transmission window, but sends the second paging message in the second paging transmission window. In this way, the first terminal device may not need to monitor the remaining POs in the first paging transmission window, but normally monitors a PO in the second paging transmission window when the first terminal device does not receive the first paging control information or the first paging message. Therefore, the first terminal device can receive the second paging message. In this way, the first terminal device can receive the second paging message, a delay of receiving the second paging message is within an acceptable range, and power consumption caused by monitoring a PO by the first terminal device in the first paging transmission window can be reduced.

S311: The core network device sends the second paging message in the first paging transmission window, and the access network device receives the second paging message from the core network device. After S311, S312 may be performed.

If S310 is performed, S311 is not performed. Alternatively, if S311 is performed, S310 is not performed. In the solution of S311, after obtaining the second paging message, the core network device still normally sends the second paging message to the access network device. In other words, the core network device may send the second paging message to the access network device in the first paging transmission window without delaying sending the second paging message.

S312: The access network device sends the second paging message in the second paging transmission window, and the terminal device receives the second paging message from the access network device. Certainly, there may be a plurality of terminal devices that may receive the second paging message from the access network device. In FIG. 3A and FIG. 3B, only the first terminal device is used as an example.

For descriptions of the second paging transmission window, refer to S310.

If S310 is performed, although the core network device obtains the second paging message for the first terminal device in the first paging transmission window, the core network device does not send the second paging message in the first paging transmission window, but sends the second paging message to the access network device in the second paging transmission window. After receiving the second paging message in the second paging transmission window, the access network device sends the second paging message in the second paging transmission window, so that the terminal device can receive the second paging message from the access network device.

Alternatively, if S311 is performed, after the core network device obtains the second paging message for the first terminal device in the first paging transmission window, although the core network device normally sends the second paging message to the access network device, the access network device delays sending the second paging message after receiving the second paging message. In other words, the access network device does not send the second paging message in the first paging transmission window, but delays sending the second paging message in the second paging transmission window. In this way, the first terminal device may not need to monitor the remaining POs in the first paging transmission window, but normally monitors a PO in the second paging transmission window when the first terminal device does not receive the first paging control information or the first paging message. Therefore, the first terminal device can receive the second paging message. In this way, the first terminal device can receive the second paging message, a delay of receiving the second paging message is within an acceptable range, and power consumption caused by monitoring a PO by the first terminal device in the first paging transmission window can be reduced.

It should be understood that S309 to S312 are not necessarily performed. It should be understood that, if the core network device obtains the second paging message for the first terminal device in the first paging transmission window, the core network device may send the second paging message in the second paging transmission window. Alternatively, if the core network device obtains the second paging message for the first terminal device in the first paging transmission window, the access network device may send the second paging message in the second paging transmission window. However, the core network device does not necessarily obtain the paging message for the first terminal device in the first paging transmission window. Therefore, S309 to S312 are not necessarily performed. Therefore, S309 to S312 are optional steps, and are represented by dashed lines in FIG. 3A and FIG. 3B.

In most cases, paging messages sent on all POs included in one paging transmission window are the same. If there is no paging message for the terminal device on some POs located before the paging transmission window, there is a high probability that the paging message for the terminal device does not appear on some POs located after the paging transmission window. In other words, if it is determined that the terminal device is not paged on a PO, monitoring a subsequent PO is redundant and unnecessary, causing a waste of power. Therefore, in this embodiment of this application, the core network device may indicate the access network device by using the second indication information, and the access network device may indicate the terminal device by using the first indication information, so that the access network device, the core network device, and the terminal device all know that new behavior can be applied. In other words, if the terminal device receives the paging control information or the paging message used to indicate that the terminal device is not paged on the current PO, the terminal device may not need to monitor the remaining POs in the first paging transmission window. When the core network device or the access network device has sent the paging control information used to indicate that there is no paging message on the current PO (or has sent the first paging message used to indicate that the first terminal device is not paged on the current PO) in the first paging transmission window, if the core network device or the access network device obtains a paging message for the first terminal device, the core network device or the access network device may delay sending the paging message, for example, delay sending the paging message in the second paging transmission window. In this way, the first terminal device can receive the paging message, a delay of receiving the paging message is within an acceptable range, and power consumption caused by monitoring a PO by the first terminal device in the first paging transmission window can be reduced.

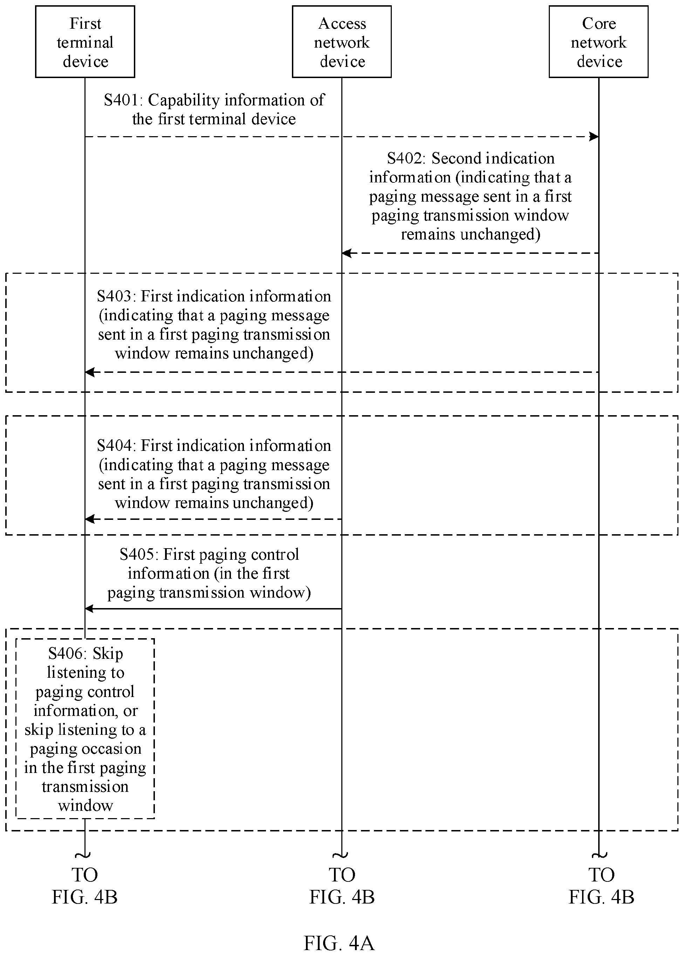

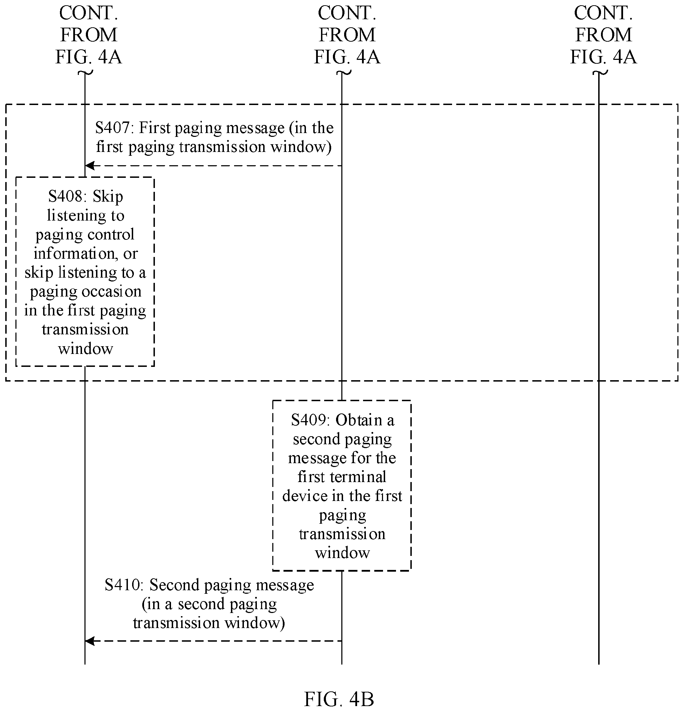

To resolve a technical problem that is the same as the technical problem resolved in the embodiment shown in FIG. 3A and FIG. 3B, an embodiment of this application provides a second communication method. By using the method, power consumption of a terminal device can also be reduced. FIG. 4A and FIG. 4B are a flowchart of the method. In the following description process, an example in which the method is applied to the network architecture shown in FIG. 2 is used. In this embodiment of this application, the terminal device is, for example, in an RRC inactive state, and the following paging may be considered as paging initiated by an access network device.

For ease of description, an example in which the method is performed by a core network device, the access network device, and the terminal device is used below. For example, this embodiment of this application is applied to the network architecture shown in FIG. 2. Therefore, the following core network device may be the core network device in the network architecture shown in FIG. 2, the following access network device may be the access network device in the network architecture shown in FIG. 2, and the following terminal device may be the terminal device in the network architecture shown in FIG. 2.

S401: A first terminal device sends capability information of the first terminal device to the core network device, and the core network device receives the capability information from the first terminal device.

For more content of S401, refer to the descriptions of S301 in the embodiment shown in FIG. 3A and FIG. 3B.

S402: The core network device sends second indication information to the access network device, and the access network device receives the second indication information from the core network device.

For more content of S402, refer to the descriptions of S302 in the embodiment shown in FIG. 3A and FIG. 3B.

S403: The core network device sends first indication information to the terminal device, and the terminal device receives the first indication information from the core network device.

S402 and S403 may be understood as that the core network device sends indication information, and the indication information may indicate that a paging message sent in the first paging transmission window remains unchanged. That the indication information may indicate that a paging message sent in the first paging transmission window remains unchanged may be understood as that the indication information indicates that a paging message sent to the first terminal device in the first paging transmission window remains unchanged, or indicates that a paging message in the first paging transmission window remains unchanged (in this case, it is considered that paging messages sent to all terminal devices in the first paging transmission window remain unchanged). The indication information includes the first indication information, or includes the second indication information, or includes the first indication information and the second indication information. In other words, that the core network device sends indication information may include: The core network device sends the first indication information to the terminal device. Alternatively, that the core network device sends indication information may include: The core network device sends the second indication information to the access network device. Alternatively, that the core network device sends indication information may include: The core network device sends the first indication information to the terminal device, and the core network device sends the second indication information to the access network device.

For more content of S403, refer to the descriptions of S303 in the embodiment shown in FIG. 3A and FIG. 3B.

S404: The access network device sends first indication information to the terminal device, and the terminal device receives the first indication information from the access network device.

S404 and S403 are parallel steps, and only one thereof is performed. If S402 and S403 are performed, S402 may be performed before S403, or S402 may be performed after S403, or S402 and S403 may be performed simultaneously. Alternatively, if S402 and S404 are performed, S402 may be performed before S404.

For more content of S404, refer to the descriptions of S304 in the embodiment shown in FIG. 3A and FIG. 3B.

Same as the embodiment shown in FIG. 3A and FIG. 3B, S401 to S404 are optional steps, and are not necessarily performed. Therefore, S401 to S404 are represented by dashed lines in FIG. 4A and FIG. 4B.

S405: The access network device sends first paging control information in the first paging transmission window, and the first terminal device receives the first paging control information from the access network device in the first paging transmission window. Certainly, there may be a plurality of terminal devices that may receive the first paging control information from the access network device. In FIG. 4A and FIG. 4B, only the first terminal device is used as an example. A terminal device in an RRC idle state uses a core network paging mechanism. For this, refer to the embodiment shown in FIG. 3A and FIG. 3B. A terminal device in an RRC inactive state uses an access network paging mechanism. Therefore, the embodiment shown in FIG. 4A and FIG. 4B is provided.

Optionally, the first paging control information may indicate that there is no paging message on a current PO. For example, the first paging control information does not indicate a paging message. In this case, it is considered that the first paging control information indicates that there is no paging message specific to any terminal device on the current PO. In this case, S406 is performed.

Alternatively, the first paging control information may indicate that there is a paging message on the current PO. In this case, S407 and S408 are performed. That is, only one of S406 and S407 and S408 is performed. Therefore, the two steps are both optional steps, and are represented by dashed lines in FIG. 4A and FIG. 4B.

For more content of S405, refer to the descriptions of S305 in the embodiment shown in FIG. 3A and FIG. 3B.

S406: The first terminal device does not monitor paging control information in the first paging transmission window, or does not monitor a paging occasion in the first paging transmission window.

For more content of S406, refer to the descriptions of S306 in the embodiment shown in FIG. 3A and FIG. 3B.

S407: The access network device sends a first paging message in the first paging transmission window, and correspondingly, the first terminal device receives the first paging message from the access network device in the first paging transmission window. Certainly, because the first paging control information indicates a paging message, there may be a plurality of terminal devices that may receive the first paging message from the access network device. In FIG. 4A and FIG. 4B, only the first terminal device is used as an example.

Specifically, the access network device sends the first paging message after sending the first paging control information in the first paging transmission window. After the first terminal device receives the first paging control information from the access network device in the first paging transmission window, because the first paging control information indicates the paging message, the first terminal device receives the first paging message from the access network device. The first terminal device decodes the received first paging message, and determines whether the first paging message includes an ID of the first terminal device. In this embodiment of this application, for example, if the first paging message does not include the ID of the first terminal device, the first paging message may indicate that the first terminal device is not paged on the current PO.

Optionally, the first paging message may indicate that a second terminal device is paged. This is equivalent to that the first paging message is not used to page the first terminal device, but may be used to page another terminal device, to improve utilization of the first paging message.

S408: The first terminal device does not monitor paging control information in the first paging transmission window, or does not monitor a paging occasion in the first paging transmission window.

For more content of S408, refer to the descriptions of S406.

S409: The access network device obtains data of the first terminal device in the first paging transmission window.

In the first paging transmission window, the access network device has sent the first paging control information to indicate that there is no paging message on the current PO, or has sent the first paging message to indicate that the first terminal device is not paged on the current PO, but the access network device obtains the data of the first terminal device. In this case, the access network device needs to generate a paging message for paging the first terminal device, for example, a second paging message. For example, after receiving the second paging message, the first terminal device can restore an RRC connection to the access network device, to receive the data from the access network device. S409 may be performed before S406 or after S406, or S409 and S406 may be performed simultaneously.

S410: The access network device sends the second paging message in a second paging transmission window, and the first terminal device receives the second paging message from the access network device. Certainly, there may be a plurality of terminal devices that may receive the second paging message from the access network device. In FIG. 4A and FIG. 4B, only the first terminal device is used as an example.

For descriptions of the second paging transmission window, refer to the related descriptions of S310 in the embodiment shown in FIG. 3A and FIG. 3B.

If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a receiving delay is acceptable. Therefore, although the access network device obtains the second paging message for the first terminal device in the first paging transmission window, the access network device does not send the second paging message in the first paging transmission window, but delays sending the second paging message in the second paging transmission window. In this way, the first terminal device may not need to monitor the remaining POs in the first paging transmission window, but normally monitors a PO in the second paging transmission window when the first terminal device does not receive the first paging control information or the first paging message. Therefore, the first terminal device can receive the second paging message. In this way, the first terminal device can receive the second paging message, a delay of receiving the second paging message is within an acceptable range, and power consumption caused by monitoring a PO by the first terminal device in the first paging transmission window can be reduced.

It should be understood that S409 and S410 are not necessarily performed. It should be understood that, if the core network device obtains the second paging message for the first terminal device in the first paging transmission window, the core network device may send the second paging message in the second paging transmission window. Alternatively, if the core network device obtains the second paging message for the first terminal device in the first paging transmission window, the access network device may send the second paging message in the second paging transmission window. However, the core network device does not necessarily obtain the paging message for the first terminal device in the first paging transmission window. Therefore, S409 and S410 are not necessarily performed. Therefore, S409 and S410 are optional steps, and are represented by dashed lines in FIG. 4A and FIG. 4B.

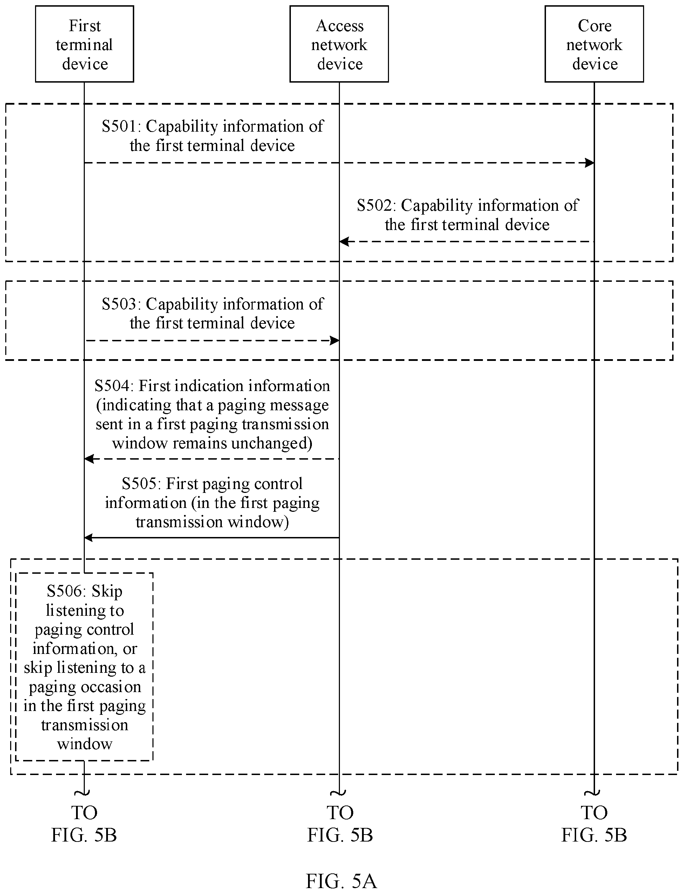

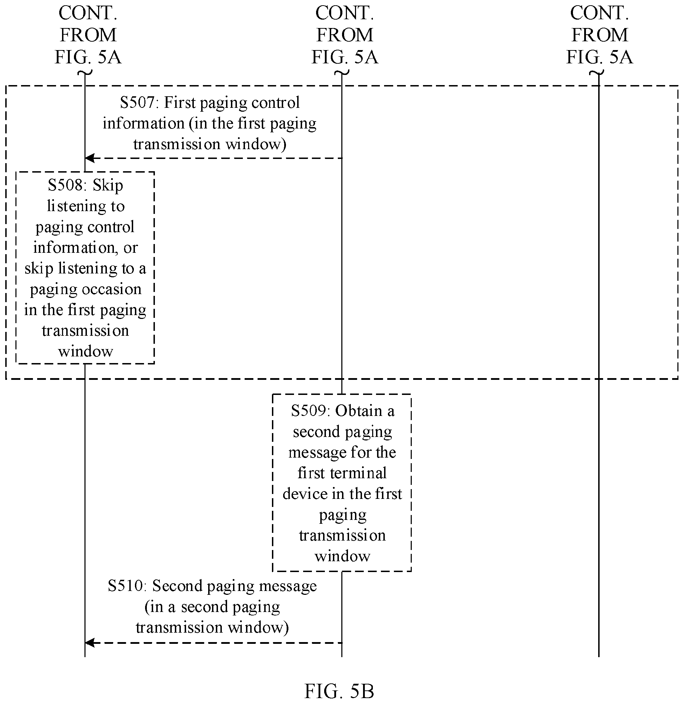

To resolve a technical problem that is the same as the technical problem resolved in the embodiment shown in FIG. 3A and FIG. 3B, an embodiment of this application provides a third communication method. By using the method, power consumption of a terminal device can also be reduced. FIG. 5A and FIG. 5B are a flowchart of the method. In the following description process, an example in which the method is applied to the network architecture shown in FIG. 2 is used. In this embodiment of this application, the terminal device is, for example, in an RRC inactive state, and the following paging may be considered as paging initiated by an access network device.

For ease of description, an example in which the method is performed by a core network device, the access network device, and the terminal device is used below. For example, this embodiment of this application is applied to the network architecture shown in FIG. 2. Therefore, the following core network device may be the core network device in the network architecture shown in FIG. 2, the following access network device may be the access network device in the network architecture shown in FIG. 2, and the following terminal device may be the terminal device in the network architecture shown in FIG. 2.

S501: A first terminal device sends capability information of the first terminal device to the core network device, and the core network device receives the capability information from the first terminal device.

For more content of S501, refer to the descriptions of S301 in the embodiment shown in FIG. 3A and FIG. 3B.

S502: The core network device sends the capability information of the first terminal device to an access network device, and the access network device receives the capability information of the first terminal device from the core network device.

In this embodiment of this application, the first terminal device may send the capability information of the first terminal device to the core network device. Alternatively, a plurality of terminal devices in a first cell (for example, some or all of the terminal devices in the first cell) may send respective capability information to the core network device. In this case, if the core network device receives the capability information of the first terminal device, the core network device sends the capability information of the first terminal device to the access network device. Alternatively, if the core network device receives the capability information of the plurality of terminal devices, the core network device may send the capability information of the plurality of terminal devices to the access network device. For example, the first cell is a serving cell of the first terminal device. If the plurality of terminal devices in the first cell send respective capability information to the core network device, the first terminal device may be one of some or all of the terminal devices. In other words, in this case, only an example in which the core network device sends the capability information of the first terminal device to the access network device is used in S502.

S503: The first terminal device sends the capability information of the first terminal device to the access network device, and the access network device receives the capability information from the first terminal device.

S502 and S503 are parallel steps, and only one thereof needs to be performed. In other words, S502 is performed, and S503 is not performed; or S503 is performed, and S502 is not performed. It may be understood that the first terminal device may send the capability information to the core network device, and the core network device forwards the capability information to the access network device. Alternatively, the first terminal device may send the capability information to the access network device without forwarding by the core network device, to reduce signaling overheads.

In this embodiment of this application, the first terminal device may send the capability information of the first terminal device to the access network device, so that the access network device determines, based on the capability information of the first terminal device, whether the first terminal device supports monitoring a paging message by using new behavior. Alternatively, a plurality of terminal devices in a first cell (for example, some or all of the terminal devices in the first cell) may send respective capability information to the access network device, so that the access network device can determine, based on the capability information of the plurality of terminal devices, whether the terminal devices in the first cell monitor paging messages by using new behavior. For example, the first cell is a serving cell of the first terminal device. If the plurality of terminal devices in the first cell send respective capability information to the access network device, the first terminal device may be one of some or all of the terminal devices. In other words, in this case, only an example in which the first terminal device sends the capability information of the first terminal device to the access network device is used in S503.

For example, the first terminal device may send the capability information of the first terminal device to the access network device in a random access procedure. For example, the first terminal device may send the capability information of the first terminal device to the access network device by using a third message (Msg3) in a four-step random access channel (4-step random access channel, 4-step RACH) or by using a message B (MsgB) in a two-step random access channel (2-step RACH). Alternatively, the first terminal device may send the capability information of the first terminal device to the access network device after random access succeeds, for example, send the capability information of the first terminal device to the access network device by using an RRC message.

S504: The access network device sends first indication information to the first terminal device, and the first terminal device receives the first indication information from the access network device.

Capability information of one terminal device may include, for example, power saving information, and the power saving information may indicate whether the terminal device has an energy saving requirement (or a power saving requirement). Certainly, the capability information of the terminal device may further include other information, for example, a parameter such as a quantity of antennas supported by the terminal device. Content included in the capability information of the terminal device is not limited in this embodiment of this application. If the power saving information included in the capability information of the terminal device indicates that the terminal device has an energy saving requirement, it may be considered that the capability information indicates that the terminal device supports monitoring a paging message by using new behavior. Therefore, the access network device may determine that, if a paging message sent to the terminal device in the first paging transmission window remains unchanged, power consumption of the terminal device can be reduced. Alternatively, if the power saving information included in the capability information of the terminal device indicates that the terminal device has no energy saving requirement, it may be considered that the capability information indicates that the terminal device does not support monitoring a paging message by using new behavior. Therefore, the access network device may determine that, if a paging message sent to the terminal device in the first paging transmission window remains unchanged, power consumption of the terminal device cannot be reduced. The access network device may determine, based on the capability information of the terminal device, whether the paging message sent by the access network to the terminal device in the first paging transmission window changes.

In this case, if only the first terminal device sends the capability information of the first terminal device to the access network device, and power saving information included in the capability information of the first terminal device indicates that the first terminal device has an energy saving requirement, the access network device may determine that, when a paging message for the first terminal device is sent, the paging message sent to the first terminal device in the first paging transmission window remains unchanged. However, if the power saving information included in the capability information of the first terminal device indicates that the first terminal device has no energy saving requirement, the access network device may determine that, when a paging message for the first terminal device is sent, the paging message sent to the first terminal device in the first paging transmission window may change or remains unchanged. In this case, the paging message sent to the first terminal device in the first paging transmission window may change or remains unchanged, and power consumption for receiving the paging message by the first terminal device is not affected.

Alternatively, if a plurality of terminal devices in the first cell send respective capability information to the access network device, the access network device may receive the plurality of pieces of capability information. If power saving information included in each of the plurality of pieces of capability information received by the access network device indicates that a corresponding terminal device has an energy saving requirement, or power saving information included in half or more of the plurality of pieces of capability information received by the access network device indicates that corresponding terminal devices have an energy saving requirement, the access network device may determine that, when a paging message for the terminal device in the first cell is sent, the paging message sent in the first paging transmission window remains unchanged. In this case, it is considered that paging messages sent to all the terminal devices in the first cell in the first paging transmission window remain unchanged. Alternatively, if power saving information included in each of the plurality of pieces of capability information received by the access network device indicates that a corresponding terminal device has no energy saving requirement, or power saving information included in half or more of the plurality of pieces of capability information received by the access network device indicates that corresponding terminal devices have no energy saving requirement, the access network device may determine that, when a paging message for the terminal device in the first cell is sent, the paging message sent in the first paging transmission window may change or remains unchanged. In this case, the paging message sent to the first terminal device in the first paging transmission window may change or remains unchanged, and power consumption for receiving the paging message by the first terminal device is not affected. It should be noted that the first cell may include one or more cells or all cells of the access network device in which the terminal device is located. If the first cell includes all the cells of the access network device in which the terminal device is located, it indicates that paging messages sent to all terminal devices of the access network device in the first paging transmission window remain unchanged or may change.

For a manner of sending the first indication information by the access network device to the terminal device, refer to the related descriptions of S304 in the embodiment shown in FIG. 3A and FIG. 3B.

S501 to S504 are optional steps, and are not necessarily performed. Therefore, S501 to S504 are represented by dashed lines in FIG. 5A and FIG. 5B.

S505: The access network device sends first paging control information in the first paging transmission window, and the first terminal device receives the first paging control information from the access network device in the first paging transmission window.

Optionally, the first paging control information may indicate that there is no paging message on a current PO. For example, the first paging control information does not indicate a paging message. In this case, it is considered that the first paging control information indicates that there is no paging message specific to any terminal device on the current PO. In this case, S506 is performed.

Alternatively, the first paging control information may indicate that there is a paging message on the current PO. In this case, S507 and S508 are performed. That is, only one of S506 and S507 and S508 is performed. Therefore, the two steps are both optional steps, and are represented by dashed lines in FIG. 5A and FIG. 5B.

For more content of S505, refer to the descriptions of S305 in the embodiment shown in FIG. 3A and FIG. 3B.

S506: The first terminal device does not monitor paging control information in the first paging transmission window, or does not monitor a paging occasion in the first paging transmission window.

For more content of S506, refer to the descriptions of S306 in the embodiment shown in FIG. 3A and FIG. 3B.

S507: The access network device sends a first paging message in the first paging transmission window, and correspondingly, the first terminal device receives the first paging message from the access network device in the first paging transmission window. Certainly, because the first paging control information indicates a paging message, there may be a plurality of terminal devices that may receive the first paging message from the access network device. In FIG. 5A and FIG. 5B, only the first terminal device is used as an example.

Specifically, the access network device sends the first paging message after sending the first paging control information in the first paging transmission window. After the first terminal device receives the first paging control information from the access network device in the first paging transmission window, because the first paging control information indicates the paging message, the first terminal device receives the first paging message from the access network device. The first terminal device decodes the received first paging message, and determines whether the first paging message includes an ID of the first terminal device. In this embodiment of this application, for example, if the first paging message does not include the ID of the first terminal device, the first paging message may indicate that the first terminal device is not paged on the current PO.

Optionally, the first paging message may indicate that a second terminal device is paged. This is equivalent to that the first paging message is not used to page the first terminal device, but may be used to page another terminal device, to improve utilization of the first paging message.

S508: The first terminal device does not monitor paging control information in the first paging transmission window, or does not monitor a paging occasion in the first paging transmission window.

For more content of S508, refer to the descriptions of S506.

S509: The access network device obtains data of the first terminal device in the first paging transmission window.

In the first paging transmission window, the access network device has sent the first paging control information, or has sent the paging message to indicate that the terminal device is not paged, but the access network device obtains the data of the first terminal device. In this case, the access network device needs to generate a paging message for paging the first terminal device, for example, a second paging message. For example, after receiving the second paging message, the first terminal device can restore an RRC connection to the access network device, to receive the data from the access network device. S509 may be performed before S506 or after S506, or S509 and S506 may be performed simultaneously.

S510: The access network device sends the second paging message in a second paging transmission window, and the first terminal device receives the second paging message from the access network device. Certainly, there may be a plurality of terminal devices that may receive the second paging message from the access network device. In FIG. 5A and FIG. 5B, only the first terminal device is used as an example.

For descriptions of the second paging transmission window, refer to the related descriptions of S308 in the embodiment shown in FIG. 3A and FIG. 3B.

If the second paging message arrives in the first paging transmission window, considering proper configuration of an eDRX cycle, the first terminal device may receive the second paging message in a next paging transmission window (for example, the first paging transmission window is a current paging transmission window (that is, a paging transmission window for receiving the first paging control information), one eDRX cycle includes one paging transmission window, and the next paging transmission window may be a paging transmission window included in a next eDRX cycle). Therefore, a delay is acceptable. Therefore, although the access network device obtains the second paging message for the first terminal device in the first paging transmission window, the access network device does not send the second paging message in the first paging transmission window, but delays sending the second paging message in the second paging transmission window. In this way, the first terminal device may not need to monitor the remaining POs in the first paging transmission window, but normally monitors a PO in the second paging transmission window when the first terminal device does not receive the first paging control information or the first paging message. Therefore, the first terminal device can receive the second paging message. In this way, the first terminal device can receive the paging message, a delay of receiving the paging message is within an acceptable range, and power consumption caused by monitoring a PO by the first terminal device in the second paging transmission window can be reduced.

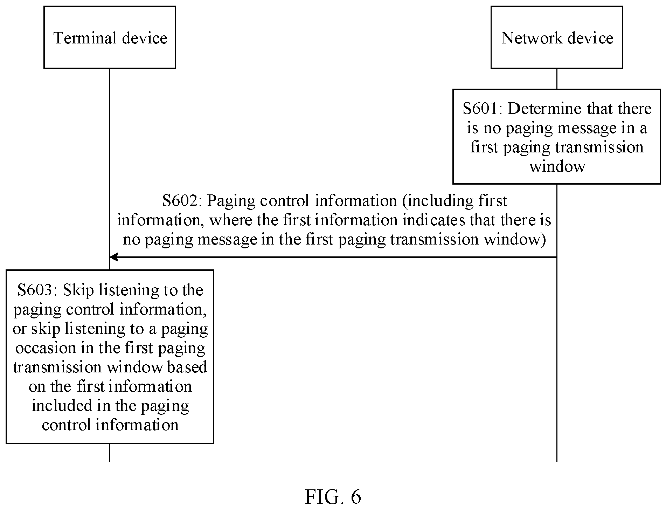

Another problem is considered below. In one PTW, all terminal devices may not be paged, that is, the base station or the core network does not send a paging message in the PTW. However, all the terminal devices still need to monitor all POs in the PTW, to determine whether the terminal devices are paged. However, in this case, it is clear that the terminal device does not receive a paging message. This is unnecessary, and consequently a waste of power is caused. Therefore, an embodiment of this application provides a fourth communication method, to resolve the problem. FIG. 6 is a flowchart of the method. In the following description process, an example in which the method is applied to the network architecture shown in FIG. 2 is used. In this embodiment of this application, the terminal device is, for example, in an RRC inactive state or an RRC idle state.

For ease of description, an example in which the method is performed by a network device and a terminal device is used below. For example, this embodiment of this application is applied to the network architecture shown in FIG. 2. Therefore, the following network device may be the access network device or the core network device in the network architecture shown in FIG. 2, and the following terminal device may be the terminal device in the network architecture shown in FIG. 2.

S601: The network device determines that there is no paging message in a first paging transmission window. Alternatively, the network device determines that no terminal device is paged in the first paging transmission window.

For descriptions of the first paging transmission window, refer to the embodiment shown in FIG. 3A and FIG. 3B.

In conclusion, the network device may determine that there is no paging message in the first paging transmission window, or the network device may determine that no terminal device is paged in the first paging transmission window.

S602: The network device sends paging control information, and the terminal device receives the paging control information from the network device. The paging control information includes first information, and the first information is used to indicate that there is no paging message in the first paging transmission window, or indicate that no terminal device is paged in the first paging transmission window. After receiving the paging control information, the terminal device may determine that there is no paging message in the first paging transmission window, or determine that no terminal device is paged in the first paging transmission window, or determine that the terminal device is not paged in the first paging transmission window.

The network device may send the paging control information in a broadcast manner. Therefore, a plurality of terminal devices may receive the paging control information. In FIG. 6, only one terminal device is used as an example. When the terminal device detects the paging control information, a case such as incorrect detection or missing detection may occur, or some terminal devices may not detect the paging control information on each PO. In this case, to improve a success rate of detecting the paging control information by the terminal device, optionally, the network device may send the paging control information on each of all POs included in the first paging transmission window. In this way, even if the terminal device does not detect the paging control information on a PO, the terminal device may detect the paging control information on a subsequent PO. Certainly, this is a specific implementation of the network device. Alternatively, the network device may not send the paging control information on each PO in the first paging transmission window. For example, the network device sends the paging control information in the first paging transmission window based on a first cycle. A length of the first cycle is, for example, an integer multiple of a time interval between two adjacent POs. Alternatively, the network device sends the paging control information only on one or more POs in the first paging transmission window. For example, the network device sends the paging control information only on the 1^{st} PO in the first paging transmission window, or sends the paging control information on the 1^{st} PO and a PO located in the middle in the first paging transmission window. In this embodiment of this application, a PO on which the network device sends the paging control information is not limited.

Certainly, ideally, the network device sends the paging control information on the 1^{st} PO in the first paging transmission window, and the terminal device also detects the paging control information on the 1^{st} PO. Because the paging control information indicates that there is no paging message in the first paging transmission window, the terminal device may not need to perform detection on all the remaining POs included in the first paging transmission window, to reduce more power consumption of the terminal device. Certainly, a PO on which the terminal device detects the paging control information also depends on implementation of the terminal device. For example, the terminal device may not detect the paging control information on the 1^{st} PO in the first paging transmission window, but may detect the paging control information starting from the 2^{nd} PO in the first paging transmission window, or the terminal device may detect the paging control information only on several POs in the first paging transmission window. This embodiment of this application imposes no limitation on a PO on which the terminal device detects the paging control information. The terminal device may determine that the terminal device is not paged in the first paging transmission window, provided that the terminal device detects the paging control information including the first information.

For example, the paging control information is DCI, or may be other types of information.

In this embodiment of this application, the first information may be carried in a reserved (reserved) bit included in the paging control information. Alternatively, the first information may be carried in a bit that is included in the paging control information and that is used to carry other information. Alternatively, a new field (field) may be added to the paging control information, and the first information is carried in the newly added field. The following describes the first two manners.

1. Manner 1: The first information is carried in a reserved bit included in the paging control information.

Currently, the paging control information includes a 2-bit field. For this, refer to Table 1.

**Table 1**

| Bit field (bit field) | Short message indicator (short message indicator) |
|---|---|
| 00 | Reserved |
| 01 | Only scheduling information for Paging is present in the DCI |
| | (Only scheduling information for Paging is present in the DCI) |
| 10 | Only short message is present in the DCI |
| | (Only short message is present in the DCI) |
| 11 | Both scheduling information for Paging and short message are present in the DCI |
| | (Both scheduling information for Paging and short message are present in the DCI) |

The 2-bit field corresponds to four states (that is, a value "00" corresponds to one state, a value "01" corresponds to one state, a value "10" corresponds to one state, and a value "11" corresponds to one state). It can be learned from Table 1 that the three states corresponding to the values of "01", "10", and "11" of the two bits have corresponding meanings, and the state corresponding to the value of "00" is not defined, and is considered as the reserved bit included in the paging control information. Therefore, in this embodiment of this application, the state corresponding to the value of "00" of the two bits may be used as the first information, that is, the first information is carried in the 2-bit field included in the paging control information. For example, a meaning of the state corresponding to the value of "00" is defined as follows: There is no paging message in the first paging transmission window, or no terminal device is paged in the first paging transmission window.

After the terminal device receives the paging control information, if the value of the 2 bit-field included in the paging control information is "00", the terminal device may determine that there is no paging message in the first paging transmission window, or determine that no terminal device is paged in the first paging transmission window, or determine that the terminal device is not paged in the first paging transmission window.

2. Manner 2: The first information is carried in a bit that is included in the paging control information and that is used to carry other information.

For example, the other information described herein is a short message, or may also be other information other than the short message. Herein, the short message is used as an example.

The paging control information includes a field used to carry the short message, which is eight bits in total. For meanings corresponding to states of the eight bits, refer to Table 2.

**Table 2**

| Bit | Short message |
|---|---|
| 1 | System information modification indication (systemInfoModification) |
| | If set to 1: indication of a BCCH modification other than SIB6, SIB7 and SIB8 (If set to 1: indication of a BCCH modification other than SIB6, SIB7 and SIB8) |
| 2 | Earthquake and tsunami warning system (earthquake and tsunami warning system, ETWS) information and commercial mobile alert system (commercial mobile alert service, CMAS) indication (etwsAndCmasIndication) |
| | If set to 1: indication of an ETWS primary notification and/or an ETWS secondary notification and/or a CMAS notification (If set to 1: indication of an ETWS primary notification and/or an ETWS secondary notification and/or a CMAS notification) |
| 3 to 8 | Not used in this release of the specification, and shall be ignored by UE if received (Not used in this release of the specification, and shall be ignored by UE if received) |

It can be learned from Table 2 that, in the eight bits, the bit 1 and the bit 2 have corresponding meanings, and the bit 3 to the bit 8 are currently reserved bits and have no specific meaning. Therefore, in this embodiment of this application, one or more of the bit 3 to the bit 8 may be used as the first information. For example, one of the bit 3 to the bit 8 may be used to carry the first information. For example, the bit is referred to as a first bit, and the first bit may be any one of the bit 3 to the bit 8. For example, if a value of the bit is a first value, it indicates that there is no paging message in the first paging transmission window, or it indicates that no terminal device is paged in the first paging transmission window. The first value is "1" or "0". In Table 3, an example in which the first bit is the bit 3 in the eight bits is used.

**Table 3**

| Bit | Short message |
|---|---|
| 1 | systemInfoModification |
| | If set to 1: indication of a BCCH modification other than SIB6, SIB7 and SIB8 |
| 2 | etwsAndCmasIndication |
| | If set to 1: indication of an ETWS primary notification and/or an ETWS secondary notification and/or a CMAS notification |
| 3 | If set to 1: indication of no paging message being sent in current PTW (If set to 1: indication of no paging message being sent in current PTW) |
| 4 to 8 | Not used in this release of the specification, and shall be ignored by UE if received |

In Table 3, an example in which the first paging transmission window is the current PTW is used. After the terminal device receives the paging control information, if the value of the first bit included in the paging control information is the first value, the terminal device may determine that there is no paging message in the first paging transmission window, or determine that no terminal device is paged in the first paging transmission window, or determine that the terminal device is not paged in the first paging transmission window.

In the foregoing several manners, the paging control information indicates a single terminal device. Alternatively, the paging control information may indicate paging to one or more groups of terminal devices. For example, terminal devices may be grouped, and then paging is performed in a unit of a group. In this case, the paging control information may include a field for grouping terminal devices, and the field is, for example, a bitmap (bitmap). Each bit in the bitmap may correspond to one or more groups of terminal devices. The bitmap corresponds to M groups of terminal devices in total, and M is an integer greater than or equal to 1. If a value of a bit in the bitmap is "1", it indicates that none of one or more groups of terminal devices corresponding to the bit is paged on a current PO . In other words, if the one or more groups of terminal devices receive the paging control information, it may be determined that no paging message needs to be continuously received on the current PO. In this terminal device grouping solution, a specific terminal device can learn, through setting of the bitmap in the paging control information, that the terminal device is not paged, instead of learning, only after receiving the paging control information and finding that there is no ID of the terminal device, that the terminal device is not paged. This can reduce power consumption caused by receiving and decoding the paging control information by the terminal device.

In this grouping paging solution, if none of the terminal devices indicated by the bitmap is paged in the first paging transmission window, the network device may still send the paging control information. In this case, the bitmap included in the paging control information is, for example, a first state. The first state may indicate that there is no paging message for the M groups of terminal devices in the first paging transmission window, or indicate that the M groups of terminal devices are not paged in the first paging transmission window. It may be understood that, when a state of the bitmap is the first state, the bitmap may be used as the first information. For example, when values of all the bits in the bitmap each are a second value, the first state may be indicated, and the second value is, for example, "1" or "0". After any one of the M groups of terminal device receives the paging control information, if the state of the bitmap included in the paging control information is the first state, the terminal device may determine that there is no paging message in the first paging transmission window, or determine that no terminal device is paged in the first paging transmission window, or determine that the terminal device is not paged in the first paging transmission window.

Certainly, the first information may alternatively exist in the paging control information in another manner. An implementation of the first information is not limited in this embodiment of this application, provided that the paging control information includes the first information.

S603: The terminal device does not monitor the paging control information in the first paging transmission window, or does not monitor a paging occasion in the first paging transmission window based on the first information included in the paging control information.

After receiving the paging control information, based on the first information, the terminal device may determine that there is no paging message in the first paging transmission window, or determine that no terminal device is paged in the first paging transmission window, or determine that the terminal device is not paged in the first paging transmission window. Therefore, the terminal device does not monitor the remaining POs included in the first paging transmission window. The remaining POs included in the first paging transmission window may include a PO that is in the first paging transmission window and that has not been monitored other than a PO that has been monitored by the terminal device.

In addition, skipping monitoring a PO herein may be skipping monitoring the paging control information on the PO. However, if the paging control information is not monitored, the paging message is not monitored. Therefore, skipping monitoring the PO herein may also be skipping monitoring the paging control information or the paging message on the PO. Alternatively, if the paging control information or the paging message is not monitored on a PO, it indicates that monitoring is not performed on the PO. Therefore, skipping monitoring a PO herein may be skipping performing monitoring on the PO.

In conclusion, in this embodiment of this application, if there is no paging message in the first paging transmission window, the network device may send the paging control information, where the paging control information may indicate that there is no paging message in the first paging transmission window. In this way, after receiving the paging control message, the terminal device does not need to perform monitoring on the remaining POs in the first paging transmission window, to reduce power consumption of the terminal device.

Any one of the embodiments shown in FIG. 3 A and FIG. 3B to FIG. 5A and FIG. 5B may be applied in combination with the embodiment shown in FIG. 6. For example, any one of the embodiments shown in FIG. 3 A and FIG. 3B to FIG. 5A and FIG. 5B may be combined with the solution corresponding to Manner 1 or the solution corresponding to Manner 2, so that a technical problem to be resolved in each embodiment of this application can be resolved at a granularity of a terminal device or at a granularity of a cell. Alternatively, any one of the embodiments shown in FIG. 3A and FIG. 3B to FIG. 5A and FIG. 5B may be combined with the solution corresponding to paging to the one or more groups of terminal devices indicated by the paging control information, so that a technical problem to be resolved in each embodiment of this application can be resolved at a granularity of a terminal device group. Certainly, any one of the embodiments shown in FIG. 3A and FIG. 3B to FIG. 5A and FIG. 5B may not be combined with the embodiment shown in FIG. 6, that is, each of the embodiments shown in FIG. 3A and FIG. 3B to FIG. 6 may be separately applied.

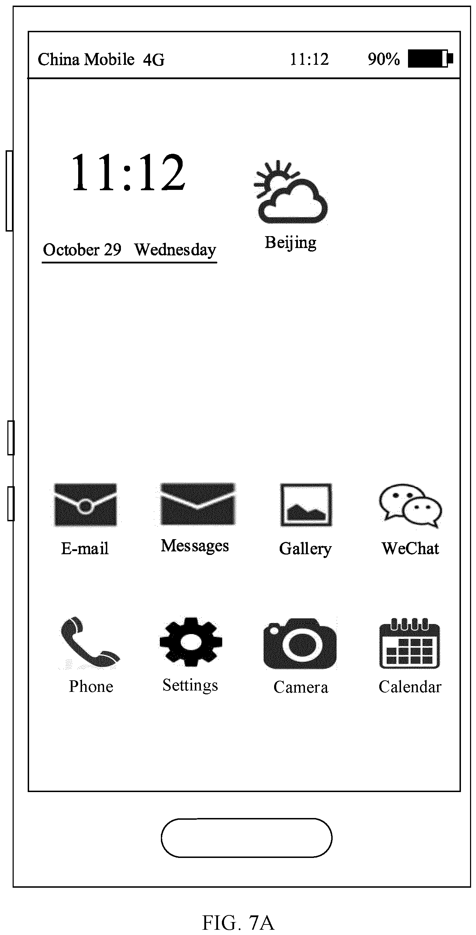

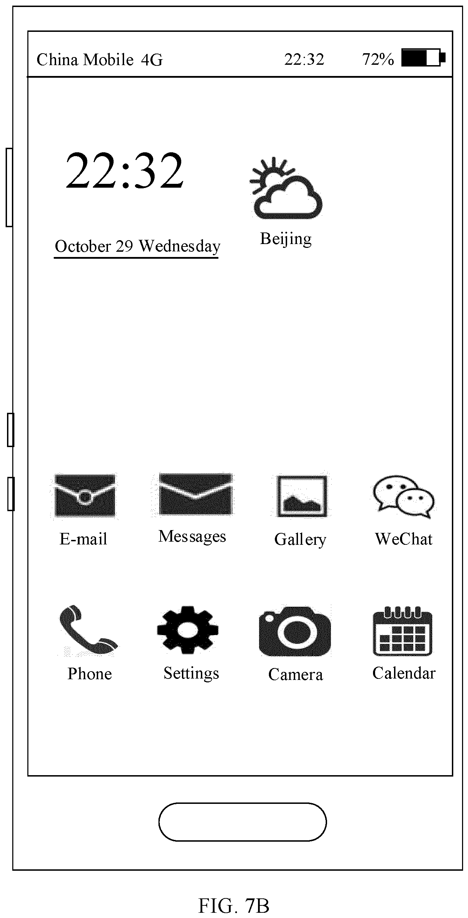

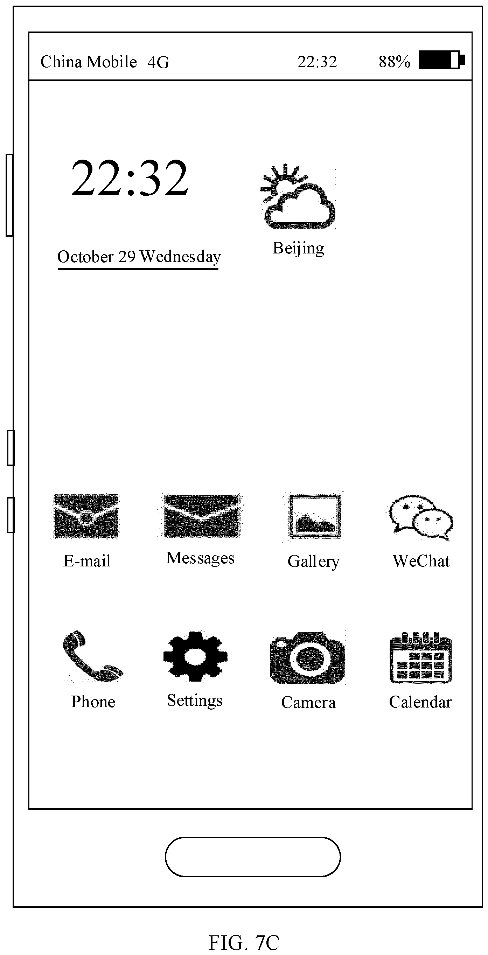

In addition, an actual application scenario according to an embodiment of this application is considered. For example, when a user does not use a terminal device (for example, a device such as a smartphone, a smartwatch, or a smart band), much power of the terminal device is still consumed after a period of time. Even if the terminal device is in an RRC idle state or an RRC inactive state and does not transmit data, because the terminal device needs to wake up to monitor a PO and many monitoring operations are unnecessary, power consumption of the terminal device is increased, power of the terminal device is consumed faster, and a battery life of the terminal device becomes poorer. FIG. 7A shows the remaining power of the terminal device used by the user at a first moment, for example, 90%. In a current solution, although the user does not use the terminal device within duration A starting from the first moment, the remaining power of the terminal device changes, for example, to 72% at a second moment. For this, refer to FIG. 7B. The first moment is a start moment of the duration A, and the second moment is an end moment of the duration A. It can be learned that, even if the user does not use the terminal device within the duration A, much power of the terminal device is consumed. This is because the terminal device needs to wake up to monitor a PO. In this case, the method provided in embodiments of this application may be used, to save power of the terminal device, and enhance a battery life of the terminal device. For example, as shown in FIG. 7C, after the method provided in embodiments of this application is used, if the user does not use the terminal device within the duration A, the remaining power of the terminal device is, for example, 88% at the second moment. It is clear that, compared with the current solution, the method provided in embodiments of this application can save power of the terminal device.

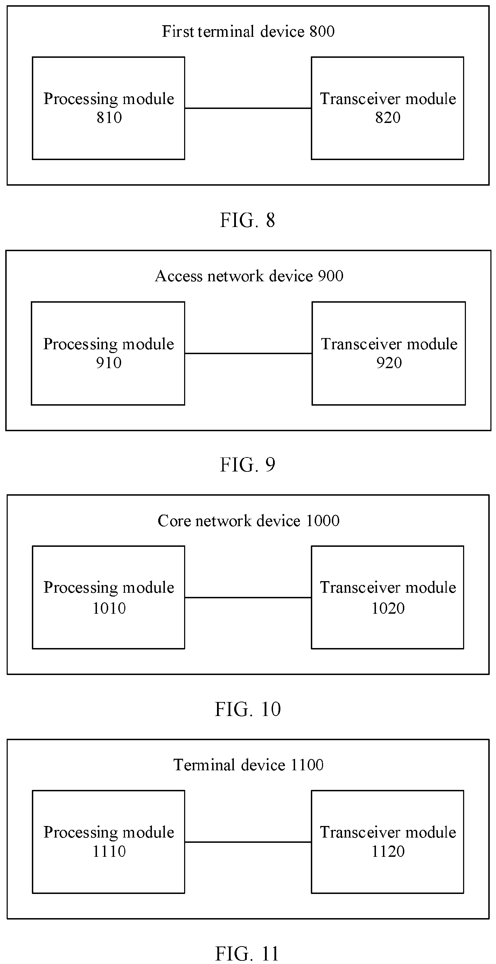

FIG. 8 is a schematic block diagram of a communications apparatus 800 according to an embodiment of this application. For example, the communications apparatus 800 is a first terminal device 800.

The first terminal device 800 includes a processing module 810 and a transceiver module 820. For example, the first terminal device 800 may be a terminal device, or may be a chip used in the terminal device or another combined device or component that has a function of the terminal device. When the first terminal device 800 is the terminal device, the transceiver module 820 may be a transceiver. The transceiver may include an antenna, a radio frequency circuit, and the like, and the processing module 810 may include a processor, for example, a baseband processor. The baseband processor may include one or more central processing units (central processing unit, CPU). When the first terminal device 800 is the component that has the function of the terminal device, the transceiver module 820 may be a radio frequency unit, and the processing module 810 may be a processor, for example, a baseband processor. When the first terminal device 800 is the chip system, the transceiver module 820 may be an input/output interface of the chip (for example, a baseband chip), and the processing module 810 may be a processor of the chip system, and may include one or more central processing units. It should be understood that, in this embodiment of this application, the processing module 810 may be implemented by a processor or a processor-related circuit component, and the transceiver module 820 may be implemented by a transceiver or a transceiver-related circuit component.

For example, the processing module 810 may be configured to perform all operations, such as S306 and S308, that are performed by the first terminal device in the embodiment shown in FIG. 3A and FIG. 3B other than receiving and sending operations, and/or configured to support another process of the technology described in this specification. The transceiver module 820 may be configured to perform all receiving and sending operations, such as S301, S303, S304, S305, S307, and S312, that are performed by the first terminal device in the embodiment shown in FIG. 3A and FIG. 3B, and/or configured to support another process of the technology described in this specification.

For another example, the processing module 810 may be configured to perform all operations, such as S406 and S408, that are performed by the first terminal device in the embodiment shown in FIG. 4A and FIG. 4B other than receiving and sending operations, and/or configured to support another process of the technology described in this specification. The transceiver module 820 may be configured to perform all receiving and sending operations, such as S401, S403, S404, S405, S407, and S410, that are performed by the first terminal device in the embodiment shown in FIG. 4A and FIG. 4B, and/or configured to support another process of the technology described in this specification.

For still another example, the processing module 810 may be configured to perform all operations, such as S506 and S508, that are performed by the first terminal device in the embodiment shown in FIG. 5A and FIG. 5B other than receiving and sending operations, and/or configured to support another process of the technology described in this specification. The transceiver module 820 may be configured to perform all receiving and sending operations, such as S501, S503, S504, S505, S507, and S510, that are performed by the first terminal device in the embodiment shown in FIG. 5A and FIG. 5B, and/or configured to support another process of the technology described in this specification.

In addition, the transceiver module 820 may be one function module. The function module can implement both a sending operation and a receiving operation. For example, the transceiver module 820 may be configured to perform all sending operations and all receiving operations performed by the first terminal device in any one of the embodiments shown in FIG. 3A and FIG. 3B to FIG. 5A and FIG. 5B. For example, when a sending operation is performed, it may be considered that the transceiver module 820 is a sending module, or when a receiving operation is performed, it may be considered that the transceiver module 820 is a receiving module. Alternatively, the transceiver module 820 may be two function modules. The transceiver module 820 may be considered as a general term of the two function modules. The two function modules are a sending module and a receiving module. The sending module is configured to implement a sending operation. For example, the sending module may be configured to perform all sending operations performed by the first terminal device in any one of the embodiments shown in FIG. 3A and FIG. 3B to FIG. 5A and FIG. 5B. The receiving module is configured to implement a receiving operation. For example, the receiving module may be configured to perform all receiving operations performed by the first terminal device in any one of the embodiments shown in FIG. 3A and FIG. 3B to FIG. 5A and FIG. 5B.

The transceiver module 820 is configured to: receive first paging control information in a first paging transmission window, where the first paging control information indicates that the first terminal device 800 is not paged on a current paging occasion, or receive a first paging message in the first paging transmission window, where the first paging message indicates that the first terminal device 800 is not paged on the current paging occasion.

The processing module 810 is configured to indicate the transceiver module 820 to skip monitoring paging control information in the first paging transmission window, or skip monitoring a paging occasion in the first paging transmission window.

In an optional implementation, the transceiver module 820 is further configured to receive a second paging message in a second paging transmission window.

In an optional implementation, the second paging transmission window is located after the first paging transmission window in time domain, and the first paging transmission window and the second paging transmission window are two adjacent paging transmission windows in time domain.

In an optional implementation, the transceiver module 820 is further configured to receive first indication information, where the first indication information indicates that a paging message sent in the first paging transmission window remains unchanged.

In an optional implementation, the first indication information is carried in an RRC message or a system message.

In an optional implementation, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

In an optional implementation, the transceiver module 820 is further configured to send capability information of the first terminal device, where the capability information is used to indicate that the first terminal device 800 supports the paging message sent in the first paging transmission window in remaining unchanged.

In an optional implementation, that the capability information is used to indicate that the first terminal device 800 supports the paging message sent in the first paging transmission window in remaining unchanged includes:
power saving information included in the capability information is used to indicate that the first terminal device 800 has a power saving requirement.

For other functions that can be implemented by the terminal device 800, refer to the related descriptions of any one of the embodiments shown in FIG. 3A and FIG. 3B to FIG. 5A and FIG. 5B. Details are not described again.

FIG. 9 is a schematic block diagram of a communications apparatus 900 according to an embodiment of this application. For example, the communications apparatus 900 is a network device 900. For example, the network device 900 is an access network device 900.

The access network device 900 includes a processing module 910 and a transceiver module 920. For example, the access network device 900 may be an access network device, or may be a chip used in the access network device or another combined device or component that has a function of the access network device. When the access network device 900 is the access network device, the transceiver module 920 may be a transceiver. The transceiver may include an antenna, a radio frequency circuit, and the like, and the processing module 910 may be a processor, for example, a baseband processor. The baseband processor may include one or more CPUs. When the access network device 900 is the component that has the function of the access network device, the transceiver module 920 may be a radio frequency unit, and the processing module 910 may be a processor, for example, a baseband processor. When the access network device 900 is the chip system, the transceiver module 920 may be an input/output interface of the chip (for example, a baseband chip), and the processing module 910 may be a processor of the chip system, and may include one or more central processing units. It should be understood that, in this embodiment of this application, the processing module 910 may be implemented by a processor or a processor-related circuit component, and the transceiver module 920 may be implemented by a transceiver or a transceiver-related circuit component.

For example, the processing module 910 may be configured to perform all operations, such as the step of determining that a paging message sent in a first paging transmission window remains unchanged, that are performed by the access network device in the embodiment shown in FIG. 3A and FIG. 3B other than receiving and sending operations, and/or configured to support another process of the technology described in this specification. The transceiver module 920 may be configured to perform all receiving and sending operations, such as S302, S304, S305, S307, S310, S311, and S312, that are performed by the access network device in the embodiment shown in FIG. 3A and FIG. 3B, and/or configured to support another process of the technology described in this specification.

For another example, the processing module 910 may be configured to perform all operations, such as S409, that are performed by the access network device in the embodiment shown in FIG. 4A and FIG. 4B other than receiving and sending operations, and/or configured to support another process of the technology described in this specification. The transceiver module 920 may be configured to perform all receiving and sending operations, such as S402, S404, S405, S407, and S410, that are performed by the access network device in the embodiment shown in FIG. 4A and FIG. 4B, and/or configured to support another process of the technology described in this specification.

For still another example, the processing module 910 may be configured to perform all operations, such as S509, that are performed by the access network device in the embodiment shown in FIG. 5A and FIG. 5B other than receiving and sending operations, and/or configured to support another process of the technology described in this specification. The transceiver module 920 may be configured to perform all receiving and sending operations, such as S502, S502, S503, S504, S505, S507, and S510, that are performed by the access network device in the embodiment shown in FIG. 5A and FIG. 5B, and/or configured to support another process of the technology described in this specification.

In addition, for an implementation of the transceiver module 920, refer to the descriptions of the implementation of the transceiver module 820.

The processing module 910 is configured to determine that a first terminal device is not paged in a first paging transmission window.

The transceiver module 920 is configured to: send first paging control information in the first paging transmission window, where the first paging control information indicates that there is no paging message on a current paging occasion, or send a first paging message in the first paging transmission window, where the first paging message indicates that the first terminal device is not paged on the current paging occasion.

In an optional implementation,
the processing module 910 is further configured to obtain a second paging message for the first terminal device in the first paging transmission window.

The transceiver module 920 is further configured to send the second paging message in a second paging transmission window.

In an optional implementation,
the processing module 910 is further configured to obtain data of the first terminal device in the first paging transmission window.

The transceiver module 920 is further configured to send a second paging message in a second paging transmission window, where the second paging message is used to page the first terminal device, to receive the data of the first terminal device.

In an optional implementation, the transceiver module 920 is further configured to skip sending the second paging message in the first paging transmission window.

In an optional implementation, the second paging transmission window is located after the first paging transmission window in time domain, and the first paging transmission window and the second paging transmission window are two adjacent paging transmission windows in time domain.

In an optional implementation, the transceiver module 920 is further configured to send first indication information, where the first indication information indicates that a paging message sent in the first paging transmission window remains unchanged.

In an optional implementation, the first indication information is carried in an RRC message or a system message.

In an optional implementation, the system message includes a first indicator field, the first indicator field is used to carry the first indication information, and the first indicator field is a field used to indicate a hyper frame number or a field used to indicate that a first cell supports eDRX, or the first indicator field is a newly added field in the system message.

In an optional implementation, the transceiver module 920 is further configured to:
receive second indication information from a core network device, where the second indication information indicates that a paging message sent in the first paging transmission window remains unchanged; or
receive capability information of the first terminal device, and determine, based on the capability information, that a paging message sent to the first terminal device in the first paging transmission window remains unchanged;or
receive capability information of a terminal device included in a first cell, and determine, based on the capability information, that a paging message sent in the first paging transmission window remains unchanged.

In an optional implementation, the capability information of the first terminal device includes power saving information, and the power saving information is used to indicate that the first terminal device has a power saving requirement.

For other functions that can be implemented by the access network device 900, refer to the related descriptions of any one of the embodiments shown in FIG. 3A and FIG. 3B to FIG. 5A and FIG. 5B. Details are not described again.

FIG. 10 is a schematic block diagram of a communications apparatus 1000 according to an embodiment of this application. For example, the communications apparatus 1000 is a network device 1000. For example, the network device 1000 is a core network device 1000.

The core network device 1000 includes a processing module 1010 and a transceiver module 1020. For example, the core network device 1000 may be a core network device, or may be a chip used in the core network device or another combined device or component that has a function of the core network device. When the core network device 1000 is the core network device, the transceiver module 1020 may be a transceiver. The transceiver may include an antenna, a radio frequency circuit, and the like, and the processing module 1010 may be a processor, for example, a baseband processor. The baseband processor may include one or more CPUs. When the core network device 1000 is the component that has the function of the core network device, the transceiver module 1020 may be a radio frequency unit, and the processing module 1010 may be a processor, for example, a baseband processor. When the core network device 1000 is the chip system, the transceiver module 1020 may be an input/output interface of the chip (for example, a baseband chip), and the processing module 910 may be a processor of the chip system, and may include one or more central processing units. It should be understood that, in this embodiment of this application, the processing module 1010 may be implemented by a processor or a processor-related circuit component, and the transceiver module 1020 may be implemented by a transceiver or a transceiver-related circuit component.

For example, the processing module 1010 may be configured to perform all operations, such as the step of determining that a paging message sent in a first paging transmission window remains unchanged, that are performed by the core network device in the embodiment shown in FIG. 3A and FIG. 3B other than receiving and sending operations, and/or configured to support another process of the technology described in this specification. The transceiver module 1020 may be configured to perform all receiving and sending operations, such as S302, S304, S305, S307, S310, S311, and S312, that are performed by the core network device in the embodiment shown in FIG. 3A and FIG. 3B, and/or configured to support another process of the technology described in this specification.

For another example, the processing module 1010 may be configured to perform all operations, such as S409, that are performed by the core network device in the embodiment shown in FIG. 4A and FIG. 4B other than receiving and sending operations, and/or configured to support another process of the technology described in this specification. The transceiver module 1020 may be configured to perform all receiving and sending operations, such as S402, S404, S405, S407, and S410, that are performed by the core network device in the embodiment shown in FIG. 4A and FIG. 4B, and/or configured to support another process of the technology described in this specification.

For still another example, the processing module 1010 may be configured to perform all operations, such as S509, that are performed by the core network device in the embodiment shown in FIG. 5A and FIG. 5B other than receiving and sending operations, and/or configured to support another process of the technology described in this specification. The transceiver module 1020 may be configured to perform all receiving and sending operations, such as S502, S502, S503, S504, S505, S507, and S510, that are performed by the core network device in the embodiment shown in FIG. 5A and FIG. 5B, and/or configured to support another process of the technology described in this specification.

In addition, for an implementation of the transceiver module 1020, refer to the descriptions of the implementation of the transceiver module 820.

The processing module 1010 is configured to determine that a first terminal device is not paged in a first paging transmission window.

The transceiver module 1020 is configured to send indication information, where the indication information indicates that a paging message sent in the first paging transmission window remains unchanged.

In an optional implementation,
the processing module 1010 is further configured to obtain a second paging message for the first terminal device in the first paging transmission window.

The transceiver module 1020 is further configured to: send the second paging message to an access network device in a second paging transmission window, or send the second paging message to the access network device in the first paging transmission window.

In an optional implementation, the transceiver module 1020 is further configured to skip sending the second paging message in the first paging transmission window.

In an optional implementation, the second paging transmission window is located after the first paging transmission window in time domain, and the first paging transmission window and the second paging transmission window are two adjacent paging transmission windows in time domain.

In an optional implementation, the transceiver module 1020 is configured to send the indication information in the following manner:
sending first indication information to the first terminal device, where the first indication information indicates that a paging message sent in the first paging transmission window remains unchanged; and/or
sending second indication information to the access network device, where the second indication information indicates that a paging message sent in the first paging transmission window remains unchanged.

In an optional implementation, the transceiver module 1020 is configured to send the second indication information to the access network device in the following manner:
sending the second indication information to the access network device when registration of the first terminal device is completed; or
sending the second indication information to the access network device when it is determined that the first terminal device is not paged.

In an optional implementation, the transceiver module 1020 is further configured to:
receive capability information of the first terminal device, and determine, based on the capability information, that a paging message sent to the first terminal device in the first paging transmission window remains unchanged;or
receive capability information of a terminal device included in a first cell, and determine, based on the capability information, that a paging message sent in the first paging transmission window remains unchanged.

In an optional implementation, the capability information of the first terminal device includes power saving information, and the power saving information is used to indicate that the first terminal device has a power saving requirement.

For other functions that can be implemented by the core network device 1000, refer to the related descriptions of any one of the embodiments shown in FIG. 3A and FIG. 3B to FIG. 5A and FIG. 5B. Details are not described again.

FIG. 11 is a schematic block diagram of a communications apparatus 1100 according to an embodiment of this application. For example, the communications apparatus 1100 is a terminal device 1100.

The terminal device 1100 includes a processing module 1110 and a transceiver module 1120. For example, the terminal device 1100 may be a terminal device, or may be a chip used in the terminal device or another combined device or component that has a function of the terminal device. When the terminal device 1100 is the terminal device, the transceiver module 1120 may be a transceiver. The transceiver may include an antenna, a radio frequency circuit, and the like, and the processing module 1110 may be a processor, for example, a baseband processor. The baseband processor may include one or more CPUs. When the terminal device 1100 is the component that has the function of the terminal device, the transceiver module 1120 may be a radio frequency unit, and the processing module 1110 may be a processor, for example, a baseband processor. When the terminal device 1100 is the chip system, the transceiver module 1120 may be an input/output interface of the chip (for example, a baseband chip), and the processing module 1110 may be a processor of the chip system, and may include one or more central processing units. It should be understood that, in this embodiment of this application, the processing module 1110 may be implemented by a processor or a processor-related circuit component, and the transceiver module 1120 may be implemented by a transceiver or a transceiver-related circuit component.

For example, the processing module 1110 may be configured to perform all operations, such as S603, that are performed by the terminal device in the embodiment shown in FIG. 6 other than receiving and sending operations, and/or configured to support another process of the technology described in this specification. The transceiver module 1120 may be configured to perform all receiving and sending operations, such as S602, that are performed by the terminal device in the embodiment shown in FIG. 6, and/or configured to support another process of the technology described in this specification.

In addition, for an implementation of the transceiver module 1120, refer to the descriptions of the implementation of the transceiver module 820.

The transceiver module 1120 is configured to receive paging control information from a network device, where the paging control information includes first information, and the first information is used to indicate that there is no paging message in a first paging transmission window.

The processing module 1110 is configured to: skip monitoring the paging control information in the first paging transmission window, or skip monitoring a paging occasion in the first paging transmission window based on the first information included in the paging control information.

In an optional implementation,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

In an optional implementation, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

For other functions that can be implemented by the terminal device 1100, refer to the related descriptions in the embodiment shown in FIG. 6. Details are not described again.

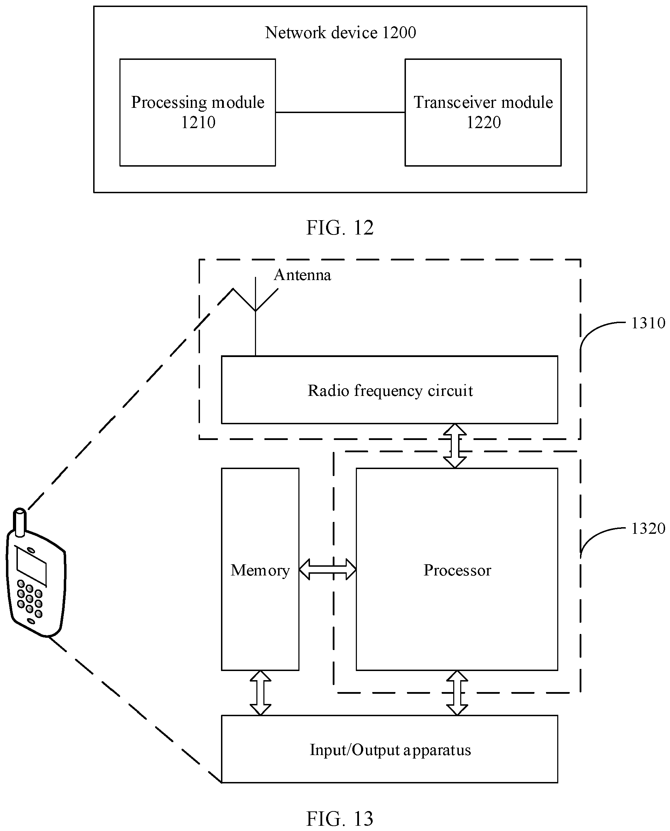

FIG. 12 is a schematic block diagram of a communications apparatus 1200 according to an embodiment of this application. For example, the communications apparatus 1200 is a network device 1200. For example, the network device 1200 is an access network device or a core network device.

The network device 1200 includes a processing module 1210 and a transceiver module 1220. For example, the network device 1200 may be a network device, or may be a chip used in the network device or another combined device or component that has a function of the network device. When the network device 1200 is the network device, the transceiver module 1220 may be a transceiver. The transceiver may include an antenna, a radio frequency circuit, and the like, and the processing module 1210 may be a processor, for example, a baseband processor. The baseband processor may include one or more CPUs. When the network device 1200 is the component that has the function of the network device, the transceiver module 1220 may be a radio frequency unit, and the processing module 1210 may be a processor, for example, a baseband processor. When the network device 1200 is the chip system, the transceiver module 1220 may be an input/output interface of the chip (for example, a baseband chip), and the processing module 1210 may be a processor of the chip system, and may include one or more central processing units. It should be understood that, in this embodiment of this application, the processing module 1210 may be implemented by a processor or a processor-related circuit component, and the transceiver module 1220 may be implemented by a transceiver or a transceiver-related circuit component.

For example, the processing module 1210 may be configured to perform all operations, such as S601, that are performed by the network device in the embodiment shown in FIG. 6 other than receiving and sending operations, and/or configured to support another process of the technology described in this specification. The transceiver module 1220 may be configured to perform all receiving and sending operations, such as S602, that are performed by the network device in the embodiment shown in FIG. 6, and/or configured to support another process of the technology described in this specification.

In addition, for an implementation of the transceiver module 1220, refer to the descriptions of the implementation of the transceiver module 820.

The processing module 1210 is configured to determine that there is no paging message in a first paging transmission window.

The transceiver module 1220 is configured to send paging control information, where the paging control information includes first information, and the first information is used to indicate that there is no paging message in the first paging transmission window.

In an optional implementation,
the first information is carried in a 2-bit field in the paging control information; or
the first information is carried in a bit that is in the paging control information and that is used to carry a short message, where the short message is used to indicate whether a system message changes, and/or indicate whether earthquake and tsunami warning system ETWS information or commercial mobile alert system CMAS information is received.

In an optional implementation, the first information is a bitmap, the bitmap corresponds to M groups of terminal devices, and the bitmap is a first state used to indicate that there is no paging message for the M groups of terminal devices in the first paging transmission window, where M is an integer greater than or equal to 1.

In an optional implementation, the transceiver module 1220 is configured to send the paging control information in the following manner:
sending the paging control information on the 1^{st} paging occasion included in the first paging transmission window; or
sending the paging control information on each of all paging occasions included in the first paging transmission window.

For other functions that can be implemented by the network device 1200, refer to the related descriptions in the embodiment shown in FIG. 6. Details are not described again.

An embodiment of this application further provides a communications apparatus. The communications apparatus may be a terminal device, or may be a circuit. The communications apparatus may be configured to perform the actions performed by the terminal device in the foregoing method embodiments.

When the communications apparatus is the terminal device, FIG. 13 is a simplified schematic diagram of a structure of the terminal device. For ease of understanding and illustration, an example in which the terminal device is a mobile phone is used in FIG. 13. As shown in FIG. 13, the terminal device includes a processor, a memory, a radio frequency circuit, an antenna, and an input/output apparatus. The processor is mainly configured to: process a communications protocol and communications data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When the processor needs to send data, the processor outputs a baseband signal to the radio frequency circuit after performing baseband processing on the to-be-sent data. The radio frequency circuit performs radio frequency processing on the baseband signal and then sends the radio frequency signal in a form of an electromagnetic wave through the antenna. When the radio frequency circuit needs to send data to the terminal device, the radio frequency circuit receives a radio frequency signal through the antenna, converts the radio frequency signal into a baseband signal, and outputs the baseband signal to the processor. The processor converts the baseband signal into data and processes the data. For ease of description, only one memory and only one processor are shown in FIG. 13. In an actual terminal device product, there may be one or more processors and one or more memories. The memory may also be referred to as a storage medium, a storage device, or the like. The memory may be disposed independently of the processor, or may be integrated into the processor. This is not limited in this embodiment of this application.

In this embodiment of this application, the antenna and the radio frequency circuit that have sending and receiving functions may be considered as a transceiver unit of the terminal device (where the transceiver unit may be one functional unit, and the functional unit can implement the sending and receiving functions; or the transceiver unit may include two functional units, namely, a receiving unit that can implement the receiving function and a sending unit that can implement the sending function), and the processor that has a processing function is considered as a processing unit of the terminal device. As shown in FIG. 13, the terminal device includes a transceiver unit 1310 and a processing unit 1320. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmit circuit, or the like.

It should be understood that the transceiver unit 1310 is configured to perform a sending operation and a receiving operation on a terminal device side in the foregoing method embodiments, and the processing unit 1320 is configured to perform an operation other than the receiving operation and the sending operation of the terminal device in the foregoing method embodiments.

For example, in an implementation, the processing unit 1210 may be configured to perform all operations, such as S306 and S308, that are performed by the first terminal device in the embodiment shown in FIG. 3A and FIG. 3B other than receiving and sending operations, and/or configured to support another process of the technology described in this specification. The transceiver unit 1220 may be configured to perform all receiving and sending operations, such as S301, S303, S304, S305, S307, and S312, that are performed by the first terminal device in the embodiment shown in FIG. 3A and FIG. 3B, and/or configured to support another process of the technology described in this specification.

For another example, in an implementation, the processing unit 1210 may be configured to perform all operations, such as S406 and S408, that are performed by the first terminal device in the embodiment shown in FIG. 4A and FIG. 4B other than receiving and sending operations, and/or configured to support another process of the technology described in this specification. The transceiver unit 1220 may be configured to perform all receiving and sending operations, such as S401, S403, S404, S405, S407, and S410, that are performed by the first terminal device in the embodiment shown in FIG. 4A and FIG. 4B, and/or configured to support another process of the technology described in this specification.

For still another example, in an implementation, the processing unit 1210 may be configured to perform all operations, such as S506 and S508, that are performed by the first terminal device in the embodiment shown in FIG. 5A and FIG. 5B other than receiving and sending operations, and/or configured to support another process of the technology described in this specification. The transceiver unit 1220 may be configured to perform all receiving and sending operations, such as S501, S503, S504, S505, S507, and S510, that are performed by the first terminal device in the embodiment shown in FIG. 5A and FIG. 5B, and/or configured to support another process of the technology described in this specification.

For yet another example, in an implementation, the processing unit 1210 may be configured to perform all operations, such as S603, that are performed by the terminal device in the embodiment shown in FIG. 6 other than receiving and sending operations, and/or configured to support another process of the technology described in this specification. The transceiver unit 1220 may be configured to perform all receiving and sending operations, such as S602, that are performed by the terminal device in the embodiment shown in FIG. 6, and/or configured to support another process of the technology described in this specification.

When the communications apparatus is a chip apparatus or circuit, the apparatus may include a transceiver unit and a processing unit. The transceiver unit may be an input/output circuit and/or a communications interface. The processing unit is an integrated processor, a microprocessor, or an integrated circuit.

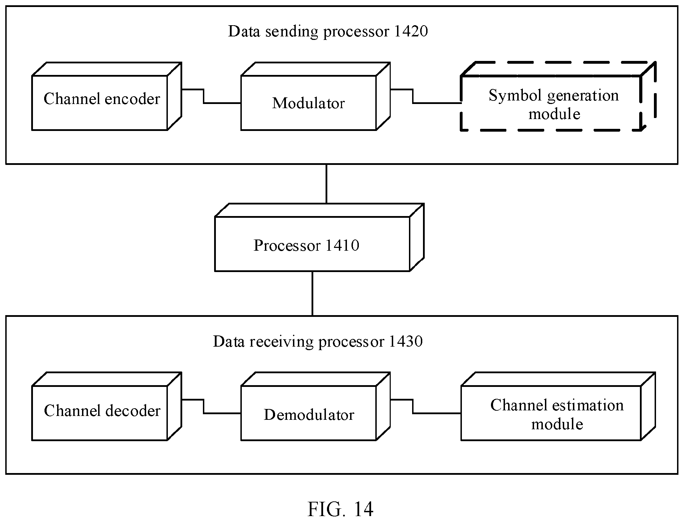

When the communications apparatus in this embodiment is the terminal device, refer to a device shown in FIG. 14. In an example, the device may implement a function similar to that of the processing module 810 in FIG. 8. In another example, the device may implement a function similar to that of the processing module 1110 in FIG. 11. In FIG. 14, the device includes a processor 1410, a data sending processor 1420, and a data receiving processor 1430. The processing module 810 in the foregoing embodiment may be the processor 1410 in FIG. 14, and implements a corresponding function. The transceiver module 820 in the foregoing embodiment may be the data sending processor 1420 and/or the data receiving processor 1430 in FIG. 14, and implements a corresponding function. Alternatively, the processing module 1110 in the foregoing embodiment may be the processor 1410 in FIG. 14, and implements a corresponding function. The transceiver module 1120 in the foregoing embodiment may be the data sending processor 1420 and/or the data receiving processor 1430 in FIG. 14, and implements a corresponding function. Although FIG. 14 shows a channel encoder and a channel decoder, it may be understood that these modules do not constitute a limitation on this embodiment, and are merely examples.

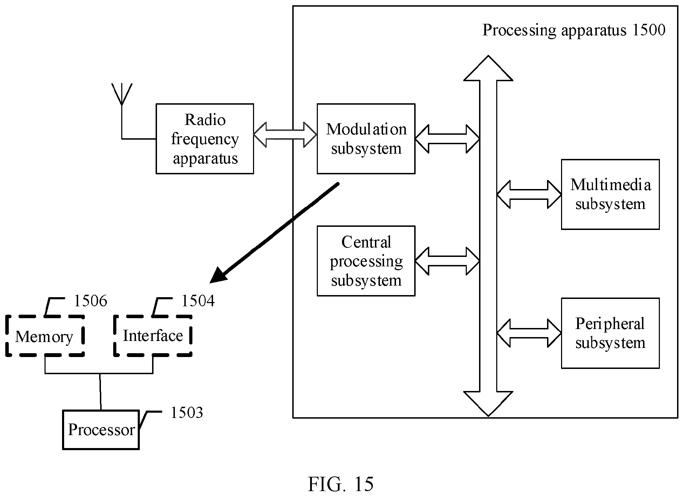

FIG. 15 shows another form of this embodiment. A processing apparatus 1500 includes modules such as a modulation subsystem, a central processing subsystem, and a peripheral subsystem. The communications apparatus in this embodiment may be used as the modulation subsystem. Specifically, the modulation subsystem may include a processor 1503 and an interface 1504. The processor 1503 implements a function of the foregoing processing module 810, and the interface 1504 implements a function of the foregoing transceiver module 820. Alternatively, the processor 1503 implements a function of the processing module 1110, and the interface 1504 implements a function of the transceiver module 1120. In another variant, the modulation subsystem includes a memory 1506, a processor 1503, and a program that is stored in the memory 1506 and that can be run on the processor. When executing the program, the processor 1503 implements the method on a terminal device side in the foregoing method embodiments. It should be noted that the memory 1506 may be nonvolatile or volatile. The memory 1506 may be located in the modulation subsystem, or may be located in the processing apparatus 1500, provided that the memory 1506 can be connected to the processor 1503.

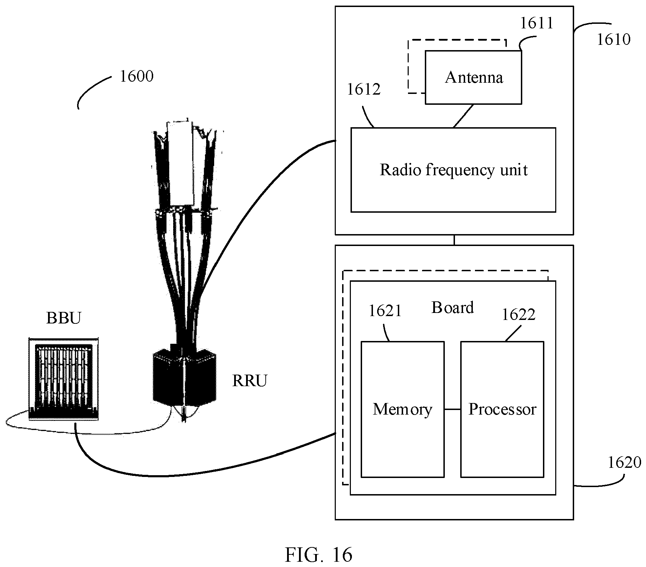

When the apparatus in this embodiment of this application is a network device, the apparatus may be that shown in FIG. 16. The apparatus 1600 includes one or more radio frequency units, such as a remote radio unit (remote radio unit, RRU) 1610 and one or more baseband units (baseband unit, BBU) (which may also be referred to as a digital unit (digital unit, DU)) 1620. The RRU 1610 may be referred to as a transceiver module. The transceiver module may include a sending module and a receiving module, or the transceiver module may be a module that can implement sending and receiving functions. The transceiver module may correspond to the transceiver module 920 in FIG. 9, or may correspond to the transceiver module 1220 in FIG. 12. Optionally, the transceiver module may also be referred to as a transceiver machine, a transceiver circuit, a transceiver, or the like, and may include at least one antenna 1611 and a radio frequency unit 1612. The RRU 1610 is mainly configured to: receive and send a radio frequency signal, and perform conversion between the radio frequency signal and a baseband signal. For example, the RRU 1610 is configured to send indication information to a terminal device. The BBU 1620 is mainly configured to: perform baseband processing, control a base station, and the like. The RRU 1610 and the BBU 1620 may be physically disposed together, or may be physically disposed separately, that is, in a distributed base station.

The BBU 1620 is a control center of the base station, and may also be referred to as a processing module. The BBU 1620 may correspond to the processing module 910 in FIG. 9, or may correspond to the processing module 1210 in FIG. 12. The BBU 1620 is mainly configured to implement a baseband processing function, such as channel encoding, multiplexing, modulation, and spectrum spreading. For example, the BBU (the processing module) may be configured to control the base station to perform the operation procedure related to the network device in the foregoing method embodiments, for example, generate the foregoing indication information.

In an example, the BBU 1620 may include one or more boards, and a plurality of boards may jointly support a radio access network (for example, an LTE network) in a single access standard, or may separately support radio access networks (for example, an LTE network, a 5G network, or another network) in different access standards. The BBU 1620 further includes a memory 1621 and a processor 1622. The memory 1621 is configured to store necessary instructions and data. The processor 1622 is configured to control the base station to perform a necessary action, for example, control the base station to perform the operation procedure related to the network device in the foregoing method embodiments. The memory 1621 and the processor 1622 may serve the one or more boards. In other words, a memory and a processor may be disposed on each board. Alternatively, a plurality of boards may share a same memory and a same processor. In addition, a necessary circuit may be further disposed on each board.

An embodiment of this application provides a first communications system. The first communications system may include the first terminal device in any one of the embodiments shown in FIG. 3A and FIG. 3B to FIG. 5A and FIG. 5B. For example, the first terminal device is the first terminal device 800 in FIG. 8.

Optionally, the first communications system may further include the access network device in any one of the embodiments shown in FIG. 3A and FIG. 3B to FIG. 5A and FIG. 5B. For example, the access network device is the access network device 900 in FIG. 9.

Optionally, the first communications system may further include the core network device in any one of the embodiments shown in FIG. 3A and FIG. 3B to FIG. 5A and FIG. 5B. For example, the core network device is the core network device 1000 in FIG. 10.

An embodiment of this application provides a second communications system. The second communications system may include the terminal device in the embodiment shown in FIG. 6, and include the network device in the embodiment shown in FIG. 6. For example, the terminal device is the terminal device 1100 in FIG. 11. For example, the network device is the network device 1200 in FIG. 12.

An embodiment of this application further provides a computer-readable storage medium. The computer-readable storage medium is configured to store a computer program. When the computer program is executed by a computer, the computer may implement the procedure related to the access network device in the embodiment shown in FIG. 3A and FIG. 3B in the foregoing method embodiments.

An embodiment of this application further provides a computer-readable storage medium. The computer-readable storage medium is configured to store a computer program. When the computer program is executed by a computer, the computer may implement the procedure related to the core network device in the embodiment shown in FIG. 3A and FIG. 3B in the foregoing method embodiments.

An embodiment of this application further provides a computer-readable storage medium. The computer-readable storage medium stores a computer program. When the computer program is executed by a computer, the computer may implement the procedure related to the first terminal device in the embodiment shown in FIG. 3A and FIG. 3B in the foregoing method embodiments.

An embodiment of this application further provides a computer-readable storage medium. The computer-readable storage medium is configured to store a computer program. When the computer program is executed by a computer, the computer may implement the procedure related to the access network device in the embodiment shown in FIG. 4A and FIG. 4B in the foregoing method embodiments.

An embodiment of this application further provides a computer-readable storage medium. The computer-readable storage medium is configured to store a computer program. When the computer program is executed by a computer, the computer may implement the procedure related to the core network device in the embodiment shown in FIG. 4A and FIG. 4B in the foregoing method embodiments.

An embodiment of this application further provides a computer-readable storage medium. The computer-readable storage medium stores a computer program. When the computer program is executed by a computer, the computer may implement the procedure related to the first terminal device in the embodiment shown in FIG. 4A and FIG. 4B in the foregoing method embodiments.

An embodiment of this application further provides a computer-readable storage medium. The computer-readable storage medium is configured to store a computer program. When the computer program is executed by a computer, the computer may implement the procedure related to the access network device in the embodiment shown in FIG. 5A and FIG. 5B in the foregoing method embodiments.

An embodiment of this application further provides a computer-readable storage medium. The computer-readable storage medium is configured to store a computer program. When the computer program is executed by a computer, the computer may implement the procedure related to the core network device in the embodiment shown in FIG. 5A and FIG. 5B in the foregoing method embodiments.

An embodiment of this application further provides a computer-readable storage medium. The computer-readable storage medium stores a computer program. When the computer program is executed by a computer, the computer may implement the procedure related to the first terminal device in the embodiment shown in FIG. 5A and FIG. 5B in the foregoing method embodiments.

An embodiment of this application further provides a computer-readable storage medium. The computer-readable storage medium is configured to store a computer program. When the computer program is executed by a computer, the computer may implement the procedure related to the network device in the embodiment shown in FIG. 6 in the foregoing method embodiments.

An embodiment of this application further provides a computer-readable storage medium. The computer-readable storage medium stores a computer program. When the computer program is executed by a computer, the computer may implement the procedure related to the terminal device in the embodiment shown in FIG. 6 in the foregoing method embodiments.

An embodiment of this application further provides a computer program product. The computer program product is configured to store a computer program. When the computer program is executed by a computer, the computer may implement the procedure related to the access network device in the embodiment shown in FIG. 3A and FIG. 3B in the foregoing method embodiments.

An embodiment of this application further provides a computer program product. The computer program product is configured to store a computer program. When the computer program is executed by a computer, the computer may implement the procedure related to the core network device in the embodiment shown in FIG. 3 A and FIG. 3B in the foregoing method embodiments.

An embodiment of this application further provides a computer program product. The computer program product is configured to store a computer program. When the computer program is executed by a computer, the computer may implement the procedure related to the first terminal device in the embodiment shown in FIG. 3A and FIG. 3B in the foregoing method embodiments.

An embodiment of this application further provides a computer program product. The computer program product is configured to store a computer program. When the computer program is executed by a computer, the computer may implement the procedure related to the access network device in the embodiment shown in FIG. 4A and FIG. 4B in the foregoing method embodiments.

An embodiment of this application further provides a computer program product. The computer program product is configured to store a computer program. When the computer program is executed by a computer, the computer may implement the procedure related to the core network device in the embodiment shown in FIG. 4A and FIG. 4B in the foregoing method embodiments.

An embodiment of this application further provides a computer program product. The computer program product is configured to store a computer program. When the computer program is executed by a computer, the computer may implement the procedure related to the first terminal device in the embodiment shown in FIG. 4A and FIG. 4B in the foregoing method embodiments.

An embodiment of this application further provides a computer program product. The computer program product is configured to store a computer program. When the computer program is executed by a computer, the computer may implement the procedure related to the access network device in the embodiment shown in FIG. 5A and FIG. 5B in the foregoing method embodiments.

An embodiment of this application further provides a computer program product. The computer program product is configured to store a computer program. When the computer program is executed by a computer, the computer may implement the procedure related to the core network device in the embodiment shown in FIG. 5A and FIG. 5B in the foregoing method embodiments.

An embodiment of this application further provides a computer program product. The computer program product is configured to store a computer program. When the computer program is executed by a computer, the computer may implement the procedure related to the first terminal device in the embodiment shown in FIG. 5A and FIG. 5B in the foregoing method embodiments.

An embodiment of this application further provides a computer program product. The computer program product is configured to store a computer program. When the computer program is executed by a computer, the computer may implement the procedure related to the network device in the embodiment shown in FIG. 6 in the foregoing method embodiments.

An embodiment of this application further provides a computer program product. The computer program product is configured to store a computer program. When the computer program is executed by a computer, the computer may implement the procedure related to the terminal device in the embodiment shown in FIG. 6 in the foregoing method embodiments.

It should be understood that the processor in embodiments of this application may be a CPU, or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

A person of ordinary skill in the art may be aware that, units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for detailed working processes of the foregoing system, apparatus, and unit, refer to corresponding processes in the foregoing method embodiments. Details are not described again herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium accessible by the computer. By way of example but not limitation, the computer-readable medium may include a random access memory (random access memory, RAM), a read-only memory (read-only memory, ROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving first paging control information in a first paging transmission window, wherein the first paging control information indicates that a first terminal device is not paged on a current paging occasion, or receiving a first paging message in the first paging transmission window, wherein the first paging message indicates that the first terminal device is not paged on the current paging occasion; and
skipping monitoring paging control information in the first paging transmission window, or skipping monitoring a paging occasion in the first paging transmission window.

2. The method according to claim 1, wherein the method further comprises:
receiving a second paging message in a second paging transmission window.

3. The method according to claim 1 or 2, wherein the second paging transmission window is located after the first paging transmission window in time domain, and the first paging transmission window and the second paging transmission window are two adjacent paging transmission windows in time domain.

4. The method according to any one of claims 1 to 3, wherein the method further comprises:
receiving first indication information, wherein the first indication information indicates that a paging message sent in the first paging transmission window remains unchanged.

5. The method according to claim 4, wherein the first indication information is carried in an RRC message or a system message.

6. The method according to claim 4 or 5, wherein the system message comprises a first indicator field, the first indicator field is used to carry the first indication information, and the first indicator field is a field used to indicate a hyper frame number or a field used to indicate that a first cell supports eDRX, or the first indicator field is a newly added field in the system message.

7. The method according to any one of claims 1 to 6, wherein the method further comprises:
sending capability information of the first terminal device, wherein the capability information is used to indicate that the first terminal device supports the paging message sent in the first paging transmission window in remaining unchanged.

8. The method according to claim 7, wherein that the capability information is used to indicate that the first terminal device supports the paging message sent in the first paging transmission window in remaining unchanged comprises:
power saving information comprised in the capability information is used to indicate that the first terminal device has a power saving requirement.

9. A communication method, wherein the method comprises:
determining that a first terminal device is not paged in a first paging transmission window; and
sending first paging control information in the first paging transmission window, wherein the first paging control information indicates that there is no paging message on a current paging occasion, or sending a first paging message in the first paging transmission window, wherein the first paging message indicates that the first terminal device is not paged on the current paging occasion.

10. The method according to claim 9, wherein the method further comprises:
obtaining a second paging message for the first terminal device in the first paging transmission window; and
sending the second paging message in a second paging transmission window.

11. The method according to claim 9, wherein the method further comprises:
obtaining data of the first terminal device in the first paging transmission window; and
sending a second paging message in a second paging transmission window, wherein the second paging message is used to page the first terminal device, to receive the data of the first terminal device.

12. The method according to any one of claims 9 to 11, wherein the method further comprises:
skipping sending the second paging message in the first paging transmission window.

13. The method according to any one of claims 9 to 12, wherein the second paging transmission window is located after the first paging transmission window in time domain, and the first paging transmission window and the second paging transmission window are two adjacent paging transmission windows in time domain.

14. The method according to any one of claims 9 to 13, wherein the method further comprises:
sending first indication information, wherein the first indication information indicates that a paging message sent in the first paging transmission window remains unchanged.

15. The method according to claim 14, wherein the first indication information is carried in an RRC message or a system message.

16. The method according to claim 14 or 15, wherein the system message comprises a first indicator field, the first indicator field is used to carry the first indication information, and the first indicator field is a field used to indicate a hyper frame number or a field used to indicate that a first cell supports eDRX, or the first indicator field is a newly added field in the system message.

17. The method according to any one of claims 9 to 16, wherein the method further comprises:
receiving second indication information from a core network device, wherein the second indication information indicates that a paging message sent in the first paging transmission window remains unchanged; or
receiving capability information of the first terminal device, and determining, based on the capability information, that a paging message sent to the first terminal device in the first paging transmission window remains unchanged; or
receiving capability information of a terminal device comprised in a first cell, and determining, based on the capability information, that a paging message sent in the first paging transmission window remains unchanged.

18. The method according to claim 17, wherein the capability information of the first terminal device comprises power saving information, and the power saving information is used to indicate that the first terminal device has a power saving requirement.

19. A communication method, wherein the method comprises:
determining that a first terminal device is not paged in a first paging transmission window; and
sending indication information, wherein the indication information indicates that a paging message sent in the first paging transmission window remains unchanged.

20. The method according to claim 19, wherein the method further comprises:
obtaining a second paging message for the first terminal device in the first paging transmission window; and
sending the second paging message to an access network device in a second paging transmission window, or sending the second paging message to the access network device in the first paging transmission window.

21. The method according to claim 19 or 20, wherein the method further comprises:
skipping sending the second paging message in the first paging transmission window.

22. The method according to any one of claims 19 to 21, wherein the second paging transmission window is located after the first paging transmission window in time domain, and the first paging transmission window and the second paging transmission window are two adjacent paging transmission windows in time domain.

23. The method according to any one of claims 19 to 22, wherein the sending indication information comprises:
sending first indication information to the first terminal device, wherein the first indication information indicates that a paging message sent in the first paging transmission window remains unchanged; and/or
sending second indication information to the access network device, wherein the second indication information indicates that a paging message sent in the first paging transmission window remains unchanged.

24. The method according to claim 23, wherein the sending second indication information to the access network device comprises:
sending the second indication information to the access network device when registration of the first terminal device is completed; or
sending the second indication information to the access network device when it is determined that the first terminal device is not paged.

25. The method according to any one of claims 19 to 24, wherein the method further comprises:
receiving capability information of the first terminal device, and determining, based on the capability information, that a paging message sent to the first terminal device in the first paging transmission window remains unchanged; or
receiving capability information of a terminal device comprised in a first cell, and determining, based on the capability information, that a paging message sent in the first paging transmission window remains unchanged.

26. The method according to claim 25, wherein the capability information of the first terminal device comprises power saving information, and the power saving information is used to indicate that the first terminal device has a power saving requirement.

27. A terminal device, comprising:
one or more processors;
one or more memories; and
one or more computer programs, wherein the one or more computer programs are stored in the one or more memories, the one or more computer programs comprise instructions, and when the instructions are executed by the one or more processors in the terminal device, the terminal device is enabled to perform the method according to any one of claims 1 to 8.

28. A network device, comprising:
one or more processors;
one or more memories; and
one or more computer programs, wherein the one or more computer programs are stored in the one or more memories, the one or more computer programs comprise instructions, and when the instructions are executed by the one or more processors in the network device, the network device is enabled to perform the method according to any one of claims 9 to 18 or the method according to any one of claims 19 to 26.

29. A computer-readable storage medium, wherein the computer-readable storage medium is configured to store a computer program, and when the computer program is run on a computer, the computer is enabled to perform the method according to any one of claims 1 to 8, the method according to any one of claims 9 to 18, or the method according to any one of claims 19 to 26.

30. A chip, comprising one or more processors and a communications interface, wherein the one or more processors are configured to read instructions, to perform the method according to any one of claims 1 to 8, the method according to any one of claims 9 to 18, or the method according to any one of claims 19 to 26.
